# EUROPÄISCHE PATENTANMELDUNG

(11) **EP 0 527 419 A1**
(43) Veröffentlichungstag der Anmeldung: **17.02.1993**
(21) Anmeldenummer: 92113235.3
(22) Anmeldetag: 03.08.1992
(51) Int. Cl.: B67B 3/064, B65G 47/14

(54) **Vorrichtung zur Verwendung bei einem Verschlussmagazin zum Einführen von Kronenkorken oder dergleichen Verschlüsse in einen Verschlusskanal sowie Verschlussmagazin**

(30) Priorität: 08.08.1991 DE 4126193; 16.09.1991 DE 4130719; 23.12.1991 DE 4142785
(71) Anmelder: KHS Maschinen- und Anlagenbau Aktiengesellschaft, D-47057 Duisburg (DE)
(72) Erfinder: Bernhard, Herbert, W-6551 Wolfsheim (DE)

(57) **Zusammenfassung**

Die Erfindung bezieht sich auf eine Vorrichtung zur Verwendung bei einem Verschlußmagazin einer Verschließmaschine zum Einführen von Kronenkorken oder dergleichen Verschlüssen aus einem zur Aufnahme einer Vielzahl solcher Verschlüsse dienenden Raum (28) in einen Verschlußkanal (29), in dem die Verschlüsse in einer Reihe aufeinander folgend abgeführt werden, mit wenigstens einer Fördereinrichtung (36,39), die an einem teilweise in dem Raum teilweise in einem Eingangsbereich des Verschlußkanales (29) gebildeten Übergang zwischen dem Raum (28) und dem Verschlußkanal (29) vorgesehen ist und die an diesem Übergangsbereich eine Förderwirkung auf die Verschlüsse in einer ersten Förderrichtung (C) aus dem Raum in den Verschlußkanal hinein ausübt. Die Besonderheit besteht darin, daß die Fördereinrichtung (39) eine magnetische Fördereinrichtung ist und daß die Ebene der Anlage- und Führungsfläche (33',37) sowie der Bewegungsbahn (42) des Magnetfeldes mit der Horizontalen einen Winkel einschließt.

## Beschreibung

Die Erfindung bezieht sich auf eine Vorrichtung zur Verwendung bei einem Verschlußmagazin zum Einführen von Kronenkorken oder dergleichen Verschlüsse aus einem zur Aufnahme einer Vielzahl solcher Verschlüsse dienenden Raum in einen anschließenden Verschlußkanal gemäß Oberbegriff Patentanspruch 1.

Verschlußmagazine für Kronenkorken oder dergl. Verschlüsse zur Verwendung bei Verschließmaschinen sind in den unterschiedlichsten Ausführungen bekannt. Im einfachsten Fall besitzt ein solches Verschlußmagazin einen Magazinraum, an welchem sich ein Verschlußkanal anschließt, der als Verschlußzuführungskanal zu einer Übergabestation führt, an der die Verschlüsse an Verschließelemente und/oder an zu verschließenden Behälter übergeben werden. Der Verschlußkanal besitzt dabei einen im wesentlichen rechteckförmigen Querschnitt, der an die Form und Größe der Verschlüsse derart angepaßt ist, daß sämtliche Verschlüsse im Verschlußkanal zwangsläufig mit ihrer Mittelachse senkrecht zur Achse des Verschlußkanals orientiert sind und mit ihrer offenen oder geschlossenen Seite den jeweils größeren Querschnittsseiten des Verschlußkanals benachbart liegen. Der Verschlußkanal besitzt weiterhin eine Wendestrecke, an der solche Verschlüsse, die hinsichtlich ihrer offenen bzw. geschlossenen Seite nicht die richtige Orientierung aufweisen, gewendet werden.

Bei höheren Leistungen weist das Verschlußmagazin vielfach zusätzlich zum Magazinraum noch einen Sammelraum auf, in dem die Verschlüsse über einen als Wendekanal ausgebildeten Verschlußkanal zugeführt werden, so daß sämtliche Verschlüsse im Sammelraum bereits hinsichtlich ihrer offenen und geschlossenen Seite die richtige Orientierung besitzen. An den Sammelraum schließt sich dann der als Zuführungskanal ausgebildete Verschlußkanal an.

Der Magazinraum sowie Sammelraum werden im Sinne der Erfindung auch als "Raum" bezeichnet.

Bekannt ist eine Vorrichtung der eingangs erwähnten Art (DE-PS 30 49 525, US-PS 40 06 812). Bei dieser bekannten Vorrichtung ist der Magazinraum vom Innenraum einer mit ihrer Achse in vertikaler Richtung orientierten, feststehenden Trommel gebildet. In der Trommel ist eine um die vertikale Trommelachse umlaufend antreibbare Scheibe angeordnet, die den Boden des Magazinraumes bildet und mit ihrem Randbereich in eine am Umfang der Trommel ausgebildete, sich radial zur vertikalen Trommelachse nach außen erstreckende Erweiterung reicht, so daß dort zwischen der Oberseite der Scheibe und einem diese Erweiterung bildenden Ring ein radial nach innen hin offener, die vertikale Trommelachse umschließender Ringkanal gebildet ist, von dem der Verschlußkanal am Übergang mit einem horizontalen Abschnitt tangential wegführt. Am Umfang der Scheibe sind mehrere Permanentmagneten vorgesehen, die ein um die vertikale Achse der Scheibe bzw. Trommel umlaufendes Magnetfeld bilden, mit welchem die Verschlüsse aus dem Magazinraum in den Verschlußkanal gefördert werden. Die Scheibe bildet dabei eine horizontale Anlage- und Führungsfläche für die offene oder geschlossene Seite der Verschlüsse, die (Anlagefläche) in einer Ebene senkrecht zur Achse liegt, um die sich das Magnetfeld bewegt bzw. die Permanentmagneten umlaufen.

Beabsichtigt ist bei dieser bekannten Vorrichtung, daß durch die umlaufende Scheibe die Verschlüsse in den Ringkanal durch Zentrifugalkraft hineinbewegt werden. Dies hat schwerwiegende Nachteile insofern, als es nicht nur im Bereich dieses Ringkanales, sonderns insbes. am Übergang zum Verschlußkanal zu einem gegenseitigen Verklemmen und Sperren der Verschlüsse kommen kann. Nachteilig ist bei der bekannten Vorrichtung weiterhin auch ein relativ hoher Abrieb an den Verschlüssen sowie eine relativ laute Arbeitsweise.

Aufgabe der Erfindung ist es, eine Vorrichtung der eingangs erwähnten Art so weiterzubilden, daß sie bei einfacher Konstruktion eine wesentlich verbesserte Arbeitsweise sowie Betriebssicherheit aufweist.

Zur Lösung dieser Aufgabe ist eine Vorrichtung entsprechend dem kennzeichnenden Teil des Patentanspruches 1 ausgebildet.

Bei der erfindungsgemäßen Vorrichtung sind die Ebene, in der die "erste" Anlage- und Führungsfläche der Verschlüsse angeordnet ist bzw. in der das Magnetfeld umläuft, entweder eine gegenüber der Horizontalen geneigte Ebene oder aber eine vertikale Ebene.

Bei einer bevorzugten Ausführungsform der Erfindung, bei der die erste Anlage- und Führungsfläche für die offene oder geschlossene Seite der Verschlüsse in einer gegenüber der Horizontalen geneigten Ebene, d.h. in einer Ebene liegt, die mit der Horizontalen einen Winkel kleiner als 90^{o}, bevorzugt einen Winkel zwischen etwa 55^{o} und etwa 65^{o} einschließt, befindet sich der Übergang zum Verschlußkanal bezogen auf diese Neigung bzw. auf die Bewegungsbahn des Magnetfeldes oder des wenigstens einen Permanentmagneten oben. Dies hat den Vorteil, daß mit der magnetischen Fördereinrichtung aus sich der unterhalb des Übergangs befindlichen ungeordneten Menge von Verschlüssen nur jeweils ein bestimmter Anteil an Verschlüssen nach oben an den Übergang mitgeführt wird, der auch ohne Verklemmen in den Verschlußkanal eingebracht werden kann, während überschüssige Verschlüsse von der Fördereinrichtung nicht ausreichend erfaßt werden und dadurch in die ungeordnete Menge zurückfallen.

Bei einer anderen Ausführungsform der Erfindung, bei der der Raum zumindest im Bereich des Übergangs von zwei parallel zueinander angeordneten und voneinander beabstandeten horizontalen Wandabschnitten gebildet ist, die jeweils eine vertikale Anlage- und Führungsfläche für die offene oder geschlossene Seite der Verschlüsse bilden, ist am Boden dieses Raumes ein Bodenabschnitt vorgesehen, der zum Inneren des Raumes hin konvex gekrümmt ist und an den sich der Übergang bzw. Verschlußkanal anschließt. Der konvex gekrümmte Bodenbereich, der eine "zweite" Anlage- und Führungsfläche für den Rand der Verschlüsse bildet, befindet sich dabei innerhalb der Bewegungsbahn, auf der das Magnetfeld bzw. der wenigstens eine Magnet in der Fördereinrichtung umläuft. Am Eingangsbereich des Verschlußkanales ist auf der dem Bodenbereich gegenüberliegenden Seite weiterhin eine Einrichtung zum Auflockern des von den Verschlüssen gebildeten Verschlußstromes vorgesehen.

Die magnetische Fördereinrichtung bzw. deren Elemente können bei der Erfindung so angeordnet werden, daß sich weitestgehend glatte Durchgänge am Übergang zwischen dem Raum und dem Verschlußkanal ergeben. Hierdurch werden schwer zugängliche Bereiche, an denen sich Fremdstoffe, wie Schmutz, Staub, usw. ablagern könnten, vermieden. Weiterhin ist durch die weitestgehend glatten Durchgänge ohne vorstehende Einbauten eine CIP-Reinigung möglich.

Weiterbildungen der Erfindung sind Gegenstand der Unteransprüche.

Die Erfindung wird im folgenden anhand der Figuren an Ausführungsbeispielen näher erläutert. Es zeigen:
- Fig. 1: ein Kronenkorkenmagazin einer Verschließmaschine mit einem Magazinraum, einem sich daran anschließenden, zwei Ausgänge aufweisenden vertikalen Verschlußkanal, einem Sammelraum und einen sich daran anschließenden vertikalen Verschlußkanal, mit jeweils einer Vorrichtung gemäß der Erfindung am Übergang zum Verschlußkanal;
- Fig. 2: in ähnlicher Darstellung wie Fig. 1 ein Kronenkorkenmagazin einer Verschließmaschine mit einem Magazinraum und einen hieran anschließenden, eine Wendestrecke aufweisenden Verschlußkanal, zusammen mit einer am Eingang dieses Verschlußkanals vorgesehenen Vorrichtung gemäß der Erfindung;
- Fig. 3: in einer der Fig. 1 bzw. 2 entsprechenden vergrößerten Detaildarstellung eine Ausführungsform der erfindungsgemäßen Vorrichtung;
- Fig. 4: einen Schnitt entsprechend der Linie I-I der Fig. 3;
- Fig. 5: den Sammelraum eines Kronenkorkenmagazins mit zwei anschließenden vertikalen Verschlußkanälen und mit einer am Übergang bzw. am Eingang zu diesen Verschlußkanälen vorgesehenen, zweiten möglichen Ausführungsform der erfindungsgemäßen Vorrichtung;
- Fig. 6: in ähnlicher Darstellung wie Fig. 4 eine dritte mögliche Ausführung der erfindungsgemäßen Vorrichtung;
- Fig. 7: in ähnlicher Darstellung wie Fig. 3 eine vierte, mögliche Ausführungsform der erfindungsgemäßen Vorrichtung;
- Fig. 8: in vereinfachter Darstellung und im Schnitt ein Kronenkorkenmagazin einer Verschließmaschine, zusammen mit einer erfindungsgemäßen Einrichtung am Übergang zum Verschlußkanal, bei einer weiteren, möglichen Ausführungsform;
- Fig. 9: einen Schnitt entsprechend der Linie II-II der Fig. 8;
- Fig. 10: in vereinfachter Darstellung und im Schnitt (ähnlich Fig. 8) ein Kronenkorkenmagazin einer Verschließmaschine, zusammen mit einer erfindungsgemäßen Einrichtung am Übergang zum Verschlußkanal, bei einer weiteren möglichen Ausführungsform;
- Fig. 11: das Kronenkorkenmagazin nach Fig. 10 in vereinfachter Ansicht in Richtung des dortigen Pfeiles F sowie teilweise aufgebrochen;
- Fig. 12: einen Querschnitt durch ein Führungsstück des Kronenkorkenmagazins nach Fig. 10, zusammen mit einem Kronenkorken;
- Fig. 13: in vereinfachter Prinzipdarstellung als weitere mögliche Ausführungsform einer Abwandlung des Kronenkorkenmagazins nach den Figuren 10 und 12;
- Fig. 14 und 15: in einer vereinfachten Prinzipdarstellung ähnlich Fig. 13 eine Anordnung bestehend aus zwei bzw. einem Kronenkorkenmagazin, aus einem anschließenden Sammelraum sowie aus zwei sich daran anschließenden vertikalen Verschlußkanälen;
- Fig. 16: mehr im Detail und im Schnitt ein Kronenkorkenmagazin zur Verwendung bei den Anordnungen nach den Fig. 14 und 15;
- Fig. 17: eine Ansicht des Kronenkorkenmagazins nach Fig. 16 in Blickrichtung des dortigen Pfeiles H;
- Fig. 18: in vereinfachter Prinzipdarstellung eine Anordnung bestehend aus zwei Kronenkorkenmagazinen und zugehörigen Verschlußkanälen.

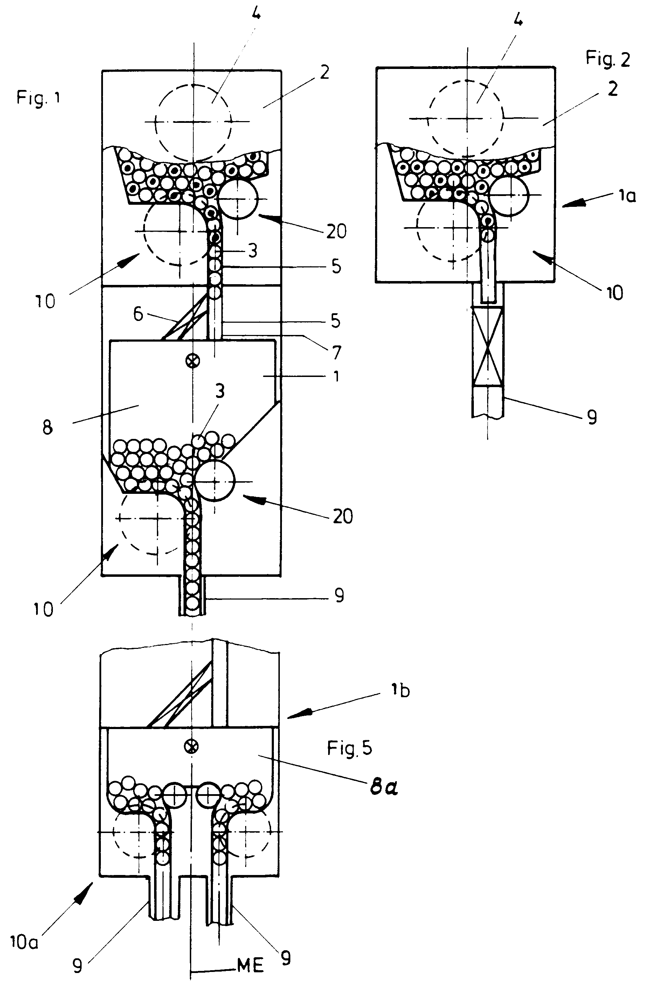

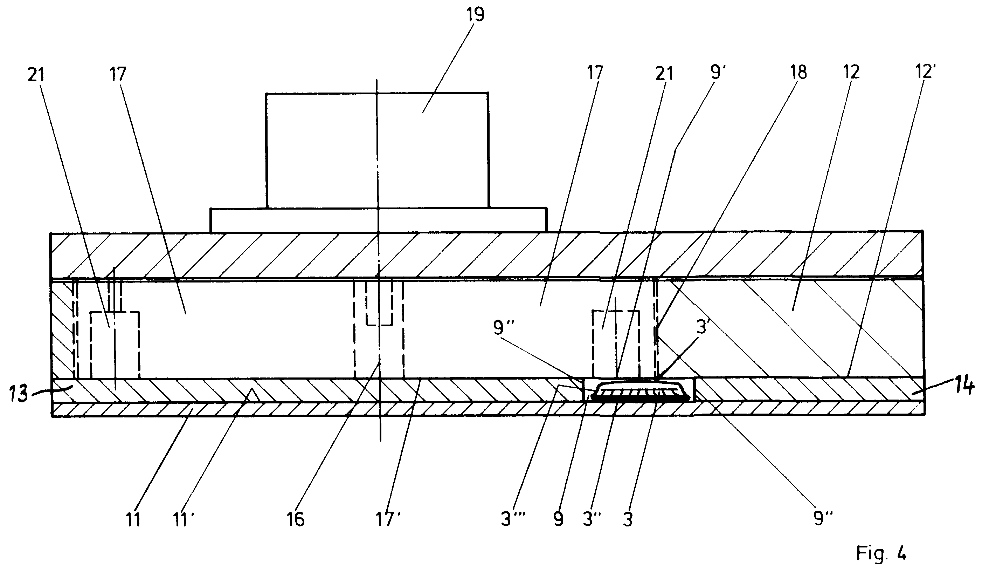

In der Fig. 1 ist 1 ein Kronenkorkenmagazin zur Verwendung bei einer Verschließmaschine. Dieses Kronenkorkenmagazin besteht in üblicher Weise aus einem oberen Magazinraum 2, welcher zur Aufnahme einer ungeordneten Menge von Kronenkorken 3 dient und das übliche Rührwerk 4 aufweist. An den sich nach unten hin trichterartig verengenden Magazinraum 2 schließt sich ein vertikaler Verschlußkanal 5 an, der als Wendekanal mit zwei Ausgängen 6 und 7 in einen Sammelraum 8 mündet. Der sich an seiner Unterseite verengende Sammelraum 8 mündet in einen Verschlußkanal 9, der als Kronenkorkenzuführungskanal zum Zuführen der Kronenkorken 3 an eine nicht dargestellte Station zum Beschicken der Schließelemente mit den Kronenkorken 3 führt. Die Querschnitte der Verschlußkanäle 5 und 9 sind so auf die Größe der Kronenkorken 3 angepaßt, daß sich in diesen Verschlußkanälen nur Reihen von Kronenkorken 3 ausbilden können, in denen (Reihen) die Kronenkorken 3 einspurig aufeinander folgend und mit ihrer Mittelachse jeweils in gleicher Richtung senkrecht zur Kanallängsrichtung orientiert, d.h. bei der für die Fig. 1 gewählten Darstellung senkrecht zur Zeichenebene dieser Fig. angeordnet sind. In ähnlicher Weise ist der Querschnitt des Sammelraumes 8 so ausgebildet, daß auch in diesem Sammelraum die Kronenkorken 3 bezogen auf ihre Mittelachse ausschließlich in eine Richtung, d.h. senkrecht zur Zeichenebene der Fig. 1 orientiert sind. Die beiden Verschlußkanäle 5 und 9 besitzen jeweils einen rechteckförmigen Querschnitt, wobei den längeren Querschnittsseiten entweder die geschlossene Seite oder offene Seite eines Kronenkorkens 3 und den beiden kürzeren Querschnittsseiten jeweils der Rand eines Kronenkorkens 3 benachbart liegt. In der Fig. 4 sind die geschlossene Seite des Kronenkorkens mit 3', die offene Seite mit 3'' und der Rand mit 3''' bezeichnet.

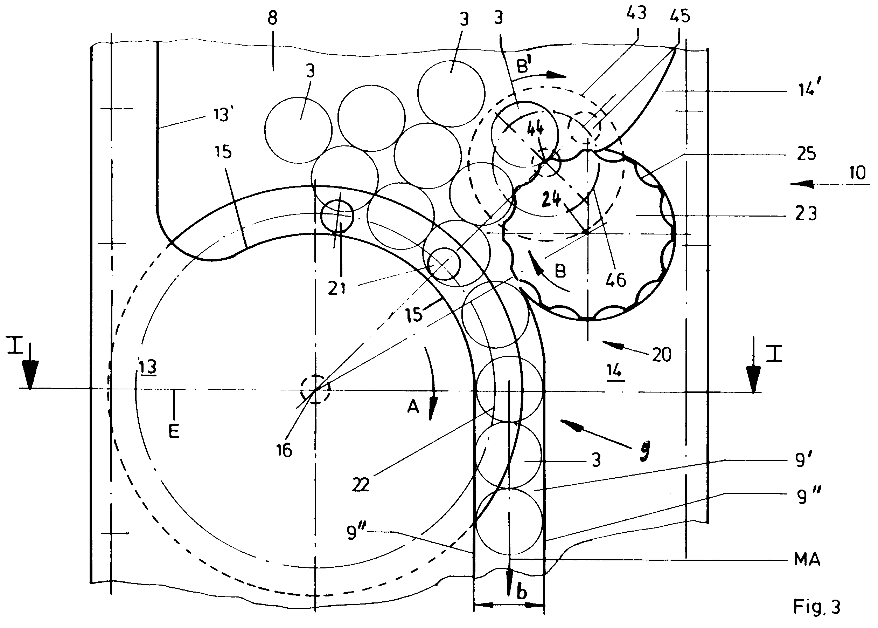

Im Verschlußkanal 5 können die Kronenkorken 3 vor den in den Sammelraum 8 mündenden Ausgängen 6 und 7 nur zwei mögliche Orientierungen bezüglich der geschlossenen Seite 3' bzw. offenen Seite 3'' aufweisen. Im Sammelraum 8 und im Verschlußkanal 9 weisen dann sämtliche Kronenkorken 3 auch bezüglich der geschlossenen Seite 3' bzw. offenen Seite 3'' die gleiche Orientierung auf. In den Fig. 3 und 4 sind die größeren Querschnittsseiten des Verschlußkanales 9 mit 9' und die kleineren Querschnittseiten mit 9'' bezeichnet.

Am Übergang 20 zwischen dem Magazinraum 2 und dem Verschlußkanal 5 bzw. dem Sammelraum 8 und dem Verschlußkanal 9 ist jeweils eine Vorrichtung 10 vorgesehen, die den Fluß der Kronenkorken 3 aus dem Magazinraum 2 bzw. Sammelraum 8 in den anschließenden Verschlußkanal 3 bzw. 9 unterstützt und fördert. Diese Vorrichtung 10 ist im Detail in den Figuren 3 und 4 dargestellt, und zwar die Vorrichtung 10 am Übergang zwischen dem Sammelraum 8 und dem Verschlußkanal 9. Die Vorrichtung 10 am Übergang zwischen dem Magazinraum 2 und dem Verschlußkanal 9 der Fig. 2 ist identisch ausgebildet.

Wie insbesondere die Fig. 4 zeigt, besteht das Kronenkorkenmagazin 1 beispielsweise am unteren Bereich des Sammelraumes 8 und am Übergang 20 zum Verschlußkanal 9 im wesentlichen aus zwei äußeren Platinen 11 und 12, von denen die Platine 11 aus einem durchsichtigen Material, beispielsweise aus Glas hergestellt ist, sowie aus zwischen diesen beiden äußeren Platinen 11 und 12 angeordneten mittleren Platinen 13 und 14, deren Dicke etwas größer ist als die Höhe der Kronenkorken 3 und die zur Bildung des Sammelraumes 8 sowie des an diesen Sammelraum 8 anschließenden Teils des Verschlußkanales 9 entsprechend ausgenommen bzw. geformt sind.

Die äußeren Platinen 11 und 12 bilden mit ihren innen liegenden, einander zugewandten Flächen11' und 12' diejenigen Flächen, gegen die die Kronenkorken 3 mit ihrer geschlossenen Seite 3' bzw. mit ihrer offenen Seite 3'' anliegen. Die Platinen 13 und 14 bilden mit ihren innen liegenden Rändern 13' bzw. 14' Anlageflächen für die Ränder 3''' der Kronenkorken 3.

Am unteren Ende besitzt der Sammelraum 8 am Übergang 20 zum Verschlußkanal 9 einen kreisbogenförmigen, zum Inneren des Sammelraumes 8 hin konvex gekrümmten Bodenabschnitt 15, der von einem entsprechend gekrümmten Teil des Randes 13' gebildet ist und in eine der beiden kürzeren Querschnittsseiten 9'', d.h. bei der für die Figuren 3 und 4 gewählten Darstellung in die linke der beiden Querschnittsseiten 9'' des Verschlußkanales 9 übergeht. Der Bodenabschnitt 15 ist um eine horizontale, senkrecht zur Zeichenebene der Fig. 3 verlaufende Achse 16 gekrümmt, die in vertikaler Richtung unterhalb des Bodenabschnittes 15 liegt. Die an der Vorderseite des Korkenmagazins 1 vorgesehene Platine 11 bildet zumindest an der in der Fig. 3 dargestellten, sich an den Sammelraum 8 anschließenden Teillänge des Verschlußkanales 9 mit seiner Fläche 11' auch vollständig die eine der beiden längeren Querschnittsseiten 9' des Verschlußkanales 9, und zwar bei der für die Fig. 4 gewählten Darstellung die untere Querschnittsseite 9'. Die andere Querschnittsseite 9' ist am Übergang 20 zwischen dem Sammelraum 8 und dem Verschlußkanal 9 teilweise von der Fläche 12' der Platine 12 sowie teilweise auch von einer planen Stirnfläche 17' einer Scheibe 17 mit kreisförmiger Umfangsfläche gebildet. Die Scheibe 17 ist dabei in einer kreisförmigen Ausnehmung 18 der Platine 12 derart angeordnet, daß die Stirnfläche 17' im wesentlichen in einer Ebene mit der Innenfläche 12' liegt. Die Scheibe 17 ist achsgleich mit der Achse 16 um diese Achse drehbar am Kronenkorkenmagazin 1 gelagert und mittels eines Antriebs 19 in Richtung des Pfeiles A um die Achse 16 rotierend antreibbar. Die Scheibe 17 besitzt einen Radius, der größer ist als der Krümmungsradius des Bodenabschnittes 15, so daß auch im Bereich des Bodenabschnittes 15 die seitliche Begrenzung des Sammelraumes 8 nicht von der Fläche 12' der Platine 12, sondern von der Stirnfläche 17' der Scheibe 17 gebildet ist. Der Radius der Scheibe 17 ist dabei kleiner als die Summe aus dem Krümmungsradius des Bodenabschnittes 15 und der Breite b bzw. größeren Querschnittsabmessung des Verschlußkanales 9, so daß am Übergang 20 vom Sammelraum 8 zum Verschlußkanal 9 die eine größere Querschnittsseite 9' des Verschlußkanales 9 teilweise von der Stirnfläche 17' und teilweise von der Fläche 12' der Platine 12 gebildet ist.

Bei der dargestellten Ausführungsform ist der Radius der Scheibe 17 so gewählt, daß am Übergang 20 etwas mehr als die Hälfte, beispielsweise zwei Drittel der längeren Querschnittsseite 9' von der Stirnfläche 17' gebildet ist.

In der aus einem nicht ferromagnetischen Material, beispielsweise aus Kunststoff hergestellten Scheibe 17 sind am Umfangsbereich mehrere kreiszylinderförmig ausgebildete Permanentmagneten 21 vorgesehen, und zwar in gleichen Winkelabständen verteilt um die Achse 16. Die Permanentmagneten 21, die bei der dargestellten Ausführungsform einen Durchmesser kleiner als der Durchmessser der Kronenkorken 3 aufweisen, sind dabei entweder bündig mit der Stirnfläche 17' oder aber durch einen dünnen Wandabschnitt von dieser Stirnfläche getrennt in Ausnehmungen der Scheibe 17 eingesetzt, und zwar in einem Winkelabstand bzw. in einer Teilung, die dem Abstand dreier, am Bodenabschnitt 15 anliegender Kronenkorken 3 entspricht. Bei der dargestellten Ausführungsform sind insgesamt neun Permanentmagneten 21 vorgesehen, und zwar in einem Winkelabstand von 40^{o}. Die Permanentmagneten 21 liegen mit ihrer Mittelachse jeweils parallel zur Achse 16 und auf einem gemeinsamen, diese Achse umschließenden Kreis dessen Radius kleiner ist als die Summe aus dem Krümmungsradius des Bodenabschnittes 15 und der halben Breite b, d.h. in der für die Fig. 3 gewählten Darstellung bewegen sich die Permanentmagneten 21 mit ihrer Mittelachse auf einer kreisförmigen Bewegungsbahn 22, die am Übergang 20 zwischen der Mittelachse MA des Verschlußkanales 9 und dem Bodenabschnitt 15 bzw. der an diesen Bodenabschnitt 15 anschließenden Querschnittsseite 9'' verläuft, wobei der radiale Abstand zwischen dem Bodenabschnitt 15 und der Bewegungsbahn 22 kleiner ist als der halbe Durchmesser der Kronenkorken 3.

Dem Bodenabschnitt 15 gegenüberliegend ist am Übergang 20 ein Rad 23 vorgesehen, welches eine im wesentlichen kreisförmige Umfangsfläche aufweist und um eine Achse 24 parallel zur Achse 16 drehbar am Kronenkorkenmagazin 1 gelagert ist und durch einen Antrieb, vorzugsweise durch den Antrieb 19 unter Verwendung eines geeigneten Getriebes in einer Drehrichtung entsprechend dem Pfeil B antreibbar ist. Während die Drehrichtung A der Scheibe 17 so gewählt ist, daß sich diese Scheibe am Übergang 20 im Sinne eines Einführens der Kronenkorken 3 aus dem Sammelraum 8 in den Verschlußkanal 9 bewegt, d.h. bei der für die Fig. 3 gewählten Darstellung die Scheibe 17 im Uhrzeigersinn umlaufend angetrieben ist, ist das Rad 23, welches als Auflockerungselement dient und insbesondere ein Verklemmen von Kronenkorken 3 am Übergang 20 verhindern soll, so angetrieben, daß gegen den Umfang des Rades 23 anliegende Kronenkorken 3 vom Übergang 20 bzw. vom Eingang in den Verschlußkanal 9 wegbewegt werden. Das Rad 23 ist daher in bezug auf die Drehrichtung gleichsinnig mit der Scheibe 17 angetrieben, d.h. bei der für die Fig. 3 gewählten Darstellung ist das Rad 23 ebenfalls im Uhrzeigersinn umlaufend angetrieben. Das Rad 23 weist an seinem Umfang eine Vielzahl von nutenförmigen Ausnehmungen 25 auf, die bei der dargestellten Ausführungsform einen kreisbogenförmigen Querschnitt besitzen, und zwar mit einem Radius, der in etwa dem halben, maximalen Durchmesser der Kronenkorken 3 entspricht. Mit einem Teil seines Umfangs reicht das Rad 23 in den Sammelraum 8 hinein und bildet mit diesem Teil seines Umfangs den Übergang zwischen der von dem Rand 14' gebildeten seitlichen Begrenzung des Sammelraumes 8 und der dem Bodenabschnitt 15 gegenüberliegenden anderen kürzeren Querschnittsseite 9'' des Verschlußkanales 9.

Bei umlaufender Scheibe 17 werden durch die Permanentmagnete 21 die sich jeweils am Bodenabschnitt 15 oder in dessen Nähe befindlichen Kronenkorken 3 mitgeführt und in den Verschlußkanal 9 gefördert, wobei im Inneren des Verschlußkanales 9, d.h. unterhalb einer horizontalen, die Achse 16 einschließenden Ebene E sich die Permanentmagnete 21 seitlich vom Verschlußkanal 9 wegbewegen. Jeder bis dahin von einem Permanentmagneten 21 mitgeführte Kronenkorken 3 wird dadurch freigegeben und kann sich aufgrund seiner Schwerkraft im Verschlußkanal 9 weiter nach unten bewegen.

Trotz des relativ großen Winkelabstandes, den die Permanentmagnete 21 voneinander aufweisen, ergibt sich auch am Übergang 20 eine dichte Folge von Kronenkorken 3, d.h. von jedem von einem Permanentmagneten 21 unmittelbar erfaßten Kronenkorken 3 werden vorausgehende Kronenkorken 3 vorwärtsbewegt bzw. -geschoben. Durch den relativ großen Winkelabstand zwischen den Permanentmagneten 21 wird ein neutraler Bereich gebildet, in welchem die magnetische Feldstärke zumindest soweit reduziert ist, daß eine ein Mitführen und/oder Halten eines Kronenkorkens 3 bewirkende Magnetkraft in diesem Bereich nicht ausgeübt wird, d. h. durch den relativ großen Winkelabstand zwischen den Permanentmagneten 21 ist sichergestellt, daß dort, wo ein Kronenkorken 3 im Verschlußkanal 9 von einem sich seitlich wegbewegenden Permanentmagneten freigegeben wird, dieser Kronenkorken nicht durch einen nachfolgenden Permanentmagneten 21 erfaßt werden kann. Letzteres würde zu einer Hemmung, zumindest jedoch zu einer Störung der Förderung der Kronenkorken 3 im Verschlußkanal 9 führen. Der oben erwähnte, gegenüber der Mittelachse MA versetzte Verlauf der Bewegungsbahn 22 trägt ebenfalls dazu bei, daß eine einwandfreie Freigabe der jeweils in den Verschlußkanal 9 eingeführten Kronenkorken 3 von den Permamentmagneten 21 erfolgt. Weiterhin wird durch die versetzte Anordnung der Bewegungsbahn 22 sichergestellt, daß die Kronenkorken 3 an dem kreisbogenförmigen Bodenabschnitt 15 geführt in den Verschlußkanal 9 gelangen. Dies trägt dazu bei, eine Brückenbildung von Kronenkorken 3 bzw. ein Verklemmen solcher Kronenkorken 3 am Übergang 20 zu verhindern.

Wie die Fig. 3 zeigt, ist der Verschlußkanal 9 am Übergang 20 in einen kurzen Abschnitt, der etwa einen Winkel von 30^{o} entspricht, leicht kreisbogenförmig um die Achse 16 gekrümmt, wobei in diesem gekrümmten Bereich der eigentliche Eingang des Verschlußkanales 9 gebildet ist, und zwar im wesentlichen zwischen dem Bodenabschnitt 15 und der Umfangsfläche des Rades 23.

Die Fig. 3 zeigt weiterhin, daß der Radius des Rades 23 kleiner ist als der Krümmungsradius des Bodenabschnittes 15, und daß die Verbindungslinie zwischen den Achsen 16 und 24 die Ebene E unter einen Winkel von etwa 30^{o} schneidet.

Es versteht sich, daß das Rad 23 zwischen den beiden Platinen 11 und 12 angeordnet ist. Grundsätzlich ist es aber auch möglich, anstelle eines solchen, relativ dünnen, scheibenartigen Rades 23 eine Scheibe oder Walze vorzusehen, die in eine angepaßte Ausnehmung der Platine 11 bzw. 12 hineinreicht bzw. im Bereich einer solchen Ausnehmung durch die Platine 11 bzw. 12 hindurchgeführt ist.

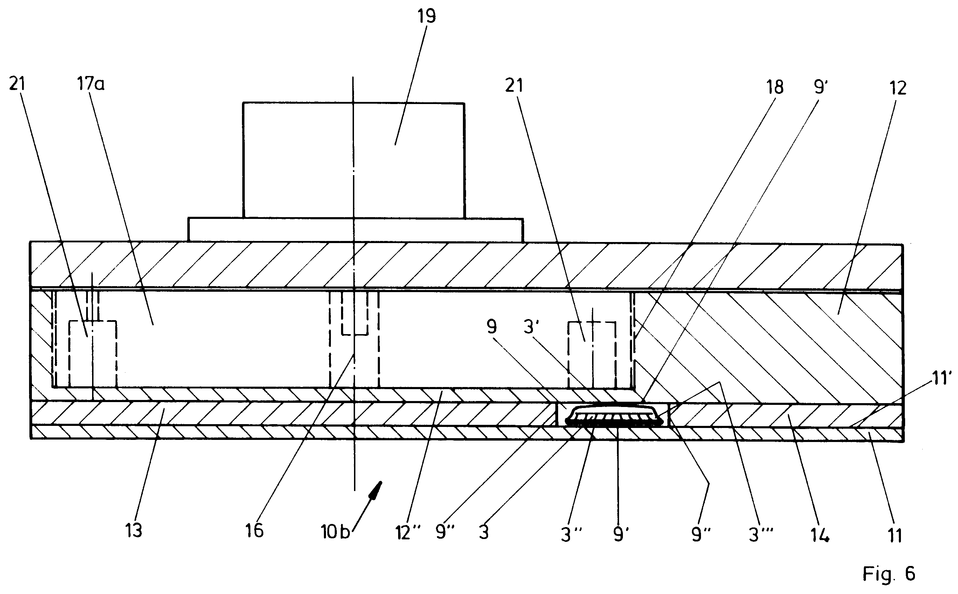

Die Fig. 5 zeigt eine Vorrichtung 10a, die sich von der Vorrichtung 10 im wesentlichen nur dadurch unterscheidet, daß zum Beschicken zweier Verschlußkanäle 9 aus einem Sammelraum 8a die Vorrichtung 10 zweifach vorgesehen ist, und zwar spiegelbildlich zu einer Mittelebene ME, zu der auch die beiden Verschlußkanäle 9 spiegelbildlich angeordnet sind.

Fig. 6 zeigt eine Vorrichtung 10b, die sich von der Vorrichtung 10 im wesentlichen nur dadurch unterscheidet, daß anstelle der Scheibe 17 eine Scheibe 17a außen liegend, d.h. durch die Platine 12 oder einen in der Dicke verringerten Abschnitt 12' dieser Platine vom Sammelraum 8 und dem Verschlußkanal 9 getrennt angeordnet ist. Hierdurch sind am Übergang 20 auch die Platine 12 bzw. deren innen liegende Fläche 12' durchgehend ausgebildet. Die Scheibe 17a ist wiederum in gleicher Weise wie die Scheibe 17 mit den Permanentmagneten 21 versehen und umlaufend angetrieben. Die Kronenkorken 3 werden durch die durch das Material der Platine 12 bzw. des Abschnittes 12'' hindurch verlaufenden Magnetlinien mitgeführt. Die Platine 12 bzw. der Abschnitt 12'' bestehen hierfür aus einem nicht ferromagnetischen Material.

Wird die Vorrichtung 10b am Übergang zwischen dem Magazinraum 2 und dem Verschlußkanal 5, also dort eingesetzt, wo die Kronenkorken 3 bezüglich ihrer geschlossenen bzw. offenen Seite 3' bzw. 3'' zwei unterschiedliche Orientierungen aufweisen können, kann es zweckmäßig sein, auch außen an der Platine 11 eine Scheibe 17a vorzusehen, wobei dann beide Scheiben 17a auf einer gemeinsamen Welle angeordnet sind.

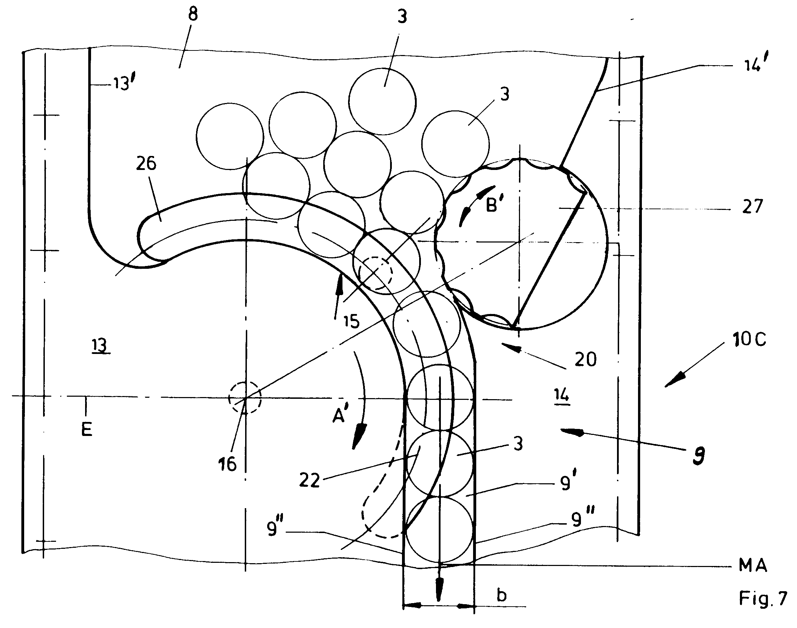

Die Fig. 7 zeigt schließlich eine Vorrichtung 10c, bei der die magnetische Förderwirkung nicht durch eine umlaufende, mit den Permanentmagneten 21 versehene Scheibe 17 bzw. 17a, sondern durch eine Magnetanordnung 26 erzeugt wird, die beispielsweise aus einer Vielzahl von im Bereich des gekrümmten Bodenabschnitts 15 und bezogen auf diesen in größerem radialen Abstand von der Achse 16 an der Platine 11 und/oder 12 vorgesehenen Magneten besteht, welche durch eine Steuereinrichtung derart angesteuert werden, daß sich ein in Richtung des Pfeiles A' sich bewegendes elektrisches Wanderfeld ergibt, wobei auch in diesem Fall wiederum die in Bewegungs- bzw. Förderrichtung A' aufeinander folgenden Maxima der magnetischen Feldstärke einen solchen Abstand voneinander aufweisen, daß ein neutraler Bereich gebildet ist, in welchem die magnetische Feldstärke zumindest soweit reduziert ist, daß eine ein Mitführen und/oder Halten eines Kronenkorkens 3 bewirkende Magnetkraft in diesem Bereich nicht ausgeübt wird. Der Abstand entspricht dann vorzugsweise einem Vielfachen, beispielsweise einem Dreifachen des Durchmessers der Kronenkorken 3. Bei der Vorrichtung 10c ist dem Bodenabschnitt 15 gegenüberliegend am Eingang zum Verschlußkanal 9 anstelle des Rades 23 zur Auflockerung des Kronenkorkenstromes bzw. zur Verhinderung einer den Kronenkorkenstrom sperrenden oder störenden Brückenbildung eines Auflockerungselement in Form eines Segmentes 27 vorgesehen, welches entsprechend dem Pfeil B' hin- und hergeschwenkt wird.

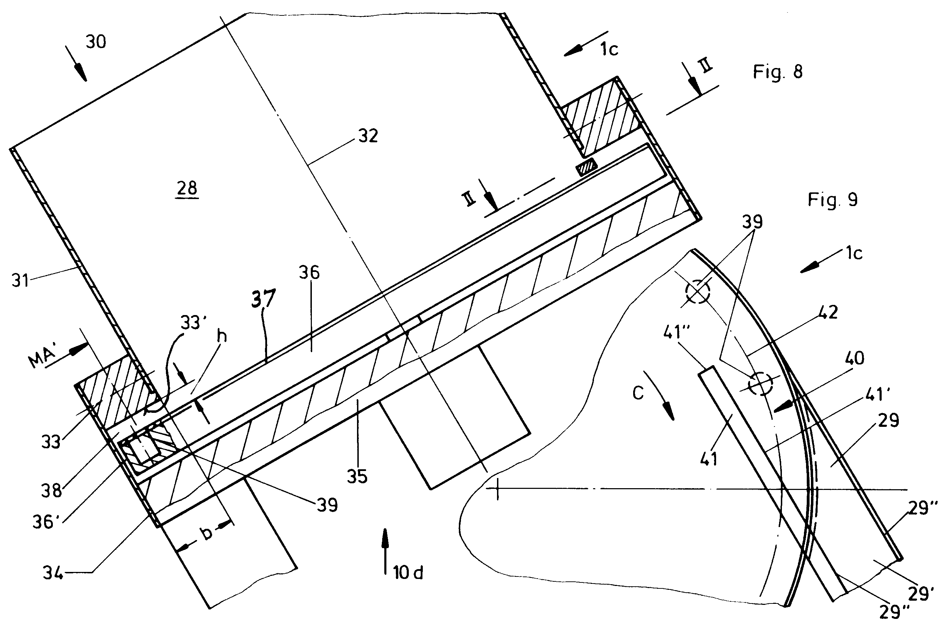

Die Fig. 8 und 9 zeigen ein Kronenkorkenmagazin 1c mit einer Vorrichtung 10d für das Einbringen der Kronenkorken 3 aus einem Magazinraum 28, in welchem wiederum eine Vielzahl solcher Kronenkorken 3 als ungeordnete Menge eingebracht ist, in einen sich anschließenden Verschlußkanal 29.

Der Magazinraum 28 ist von dem Innenraum eines Topfes 30 gebildet, der eine zylinderförmige Umfangswand 31 aufweist und mit seiner Topfachse 32 gegenüber der Horizontalen geneigt angeordnet ist. Bei der dargestellten Ausführungsform schließt die Topfachse 32 mit der Horizontalen einen Winkel von etwa 30^{o} ein.

Im Bereich des unteren Randes ist bei der dargestellten Ausführungsform die Umfangswand 31 an der Innenfläche eines radial außen liegenden, die Topfachse 32 konzentrisch umschließenden Ringes 33 befestigt, der seinerseits an dem oberen Randbereich einer ringförmigen, die Topfachse 32 und den Ring 33 konzentrisch umschließenden Ringwand 34 befestigt ist, die im Bereich des unteren Randes an einer kreisscheibenförmigen Halteplatte 35 befestigt ist. Mit Hilfe der Halteplatte 35 ist der Topf 30 an einem nicht dargestellten Maschinengestell des Kronenkorkenmagazin 1c in der Weise befestigt, daß die Topfachse 32 die oben genannte Neigung aufweist.

An der Oberseite ist der Topf 30 zum Einbringen der Kronenkorken 3 offen. Der Boden des Topfes 30 bzw. des Magazinraumes 28 ist von einer Scheibe 36 mit kreisförmiger Umfangsfläche gebildet, die mit ihrer Achse achsgleich mit der Topfachse 32 liegt und in der Halteplatte 35 um diese Achse drehbar gelagert ist. Durch einen nicht dargestellten Antrieb ist die Scheibe 36 um die Achse 32 antreibbar, und zwar in Richtung des Pfeiles C der Fig. 9.

Die Scheibe 36 besteht bei der dargestellten Ausführungsform aus Kunststoff und ist an ihrer planen, der offenen Seite des Magazinraumes 28 zugewandten oberen Seite mit einer dünnen Schicht oder Auflage 37 aus einem Material versehen, welches einen Durchtritt von Magnetlinien ermöglicht. Bei der dargestellten Ausführungsform besteht diese Auflage 37 aus einem Zuschnitt eines Blechs aus einem nicht ferromagnetischen Edelstahl. Die Auflage 37 ist beispielsweise durch Aufkleben oder in anderer geeigneter Weise an der Scheibe 36 befestigt. Die Scheibe 36 reicht mit ihrem Umfangsrand bzw. mit ihrem dortigen Randbereich 36' bis in die Nähe der Ringwand 34 und unter den Ring 33. Die Oberseite der Scheibe 36 bzw. die dortige Auflage 37 ist von der in einer Ebene senkrecht zur Topfachse 32 liegenden Unterseite 33' des Ringes 33 in einer Achsrichtung parallel zur Topfachse 32 so beabstandet, daß unterhalb des Ringes 33 zwischen diesem und dem Randbereich 36' ein kanalartiger Bereich 38 gebildet ist, der bezogen auf die Topfachse 32 radial nach innen zum Magazinraum 28 hin offen ist, sich konzentrisch um die Topfachse 32 erstreckt. Der Bereich 38 besitzt einen in etwa rechteckförmigen Querschnitt, der an die Formgebung der Kronenkorken 3 derart angepaßt ist, daß diese in dem Bereich 38 nur zwei mögliche Orientierungen aufweisen können, nämlich mit ihrer geschlossenen Seite 3' oder mit ihrer offenen Seite 3'' auf der Oberseite der Scheibe 36 aufliegend. Der Bereich 38 besitzt dementsprechend in Richtung der Topfachse 32 eine Höhe h, die etwas größer ist als die Höhe der Kronenkorken 3, auf jeden Fall jedoch wesentlich kleiner ist als der Durchmesser der Kronenkorken 3. Die radiale Breite b' des Bereichs 38 entspricht bei der dargestellten Ausführungsform dem Durchmesser der Kronenkorken 3.

Am Randbereich 36' sind eine Vielzahl von Permanentmagneten 39 vorgesehen, die hinsichtlich Form und Größe den Permanentmagneten 21 entsprechen und mit ihrer Achse parallel zur Topfachse 32 in Ausnehmungen der Scheibe 36 gehalten sind. Die Permanentmagneten 39 besitzen am Umfang der Scheibe 36 wiederum einen solchen Abstand voneinander, daß zwischen zwei in Drehrichtung C aufeinanderfolgenden Permanentmagneten 39 ein neutraler Bereich gebildet ist, d.h. bei dieser Ausführung ist der Abstand der Permanentmagneten 39 so gewählt, daß zwischen zwei jeweils über einem Permanentmagneten 39 angeordneten bzw. von diesem erfaßten Kronenkorken 3 ein Kronenkorken 3 Platz findet, der nicht im Bereich eines Permanentmagneten 39 vorgesehen ist. Bei der dargestellten Ausführungsform sind am Randbereich 36' insgesamt 22 Permanentmagneten in einem Winkelabstand von etwa 16^{o} vorgesehen.

An dem durch die Schrägstellung der Topfachse 32 bedingten oben liegenden Bereich zweigt vom Bereich 38 der Verschlußkanal 29 tangential ab, der (Verschlußkanal) nach einem horizontal verlaufenden Abschnitt über einen bogenförmigen Abschnitt in einen im wesentlichen vertikal nach unten verlaufenden Abschnitt aufweist. Der Verschlußkanal 29 besitzt wieder einen rechteckförmigen Querschnitt mit den größeren Querschnittsseiten 29' und den kleineren Querschnittsseiten 29''. In dem Verschlußkanal 29 ist auch eine Strecke zum Wenden solcher Kronenkorken 3 vorgesehen, die nicht auch bezüglich ihrer geschlossenen Seite 3' bzw. offenen Seite 3'' die richtige Orientierung aufweisen.

Am Übergang 40 zwischen dem Magazinraum 28 bzw. dem Bereich 38 und dem Verschlußkanal 29 ist eine der größeren Querschnittsseiten 29' im wesentlichen in einer Ebene mit der Oberseite der Scheibe 36 und die andere Querschnittsseite 29' darüberliegend, beispielsweise in einer Ebene mit der Unterseite 33' vorgesehen. Die bezogen auf die Topfachse 32 am weitesten außen liegende schmälere Querschnittsseite 29'' schließt an die von der Ringwand 34 gebildete äußere Begrenzungsfläche oder Anlage des Teilbereichs 38 an. Weiterhin ist am Übergang 40 ein bei der dargestellten Ausführungsform leistenartig ausgebildetes Führungsstück 41 mit der Scheibe 36 nicht mitdrehend, d.h. ortsfest vorgesehen, welches an seiner bezogen auf die Topfachse 32 radial außen liegenden Seite eine Führungsfläche 41' bildet, die in die andere, der Topfachse 32 näherliegende schmälere Querschnittsseite 29'' übergeht. Am Übergang 40 liegt die geradlinig verlaufende Führungsfläche 41' in einem radialen Abstand von der Topfachse 32, der etwa um die Breit b' kleiner ist als der halbe Durchmesser der Scheibe 36.

Die in dem Magazinraum 28 eingebrachten und auf der umlaufenden Scheibe 36 aufliegenden Kronenkorken 3 rutschen (auch unterstützt durch die Zentrifugalkraft der umlaufenden Scheibe 36) seitlich in den Teilbereich 38 und werden dort durch die Permanentmagneten 39 mitgeführt, und zwar in dem kanalartigen Bereich 38 schräg nach oben an den Übergang 40, an welchem die Kronenkorken 3 dann durch das als Abstreifer wirkende Führungsstück 41 an der Führungsfläche 41' gleitend in den Kanal 29 nacheinander eingeschoben werden.

Wie die Fig. 8 und 9 zeigen, bewegen sich die Permanentmagnete 39 mit ihrer Mittelachse auf einer kreisförmigen Bewegungsbahn 42, die der äußeren Begrenzung des Bereichs 38, d.h. der Ringwand 34 näherliegt als die Mittelachse MA' dieses Bereichs 38. Hierdurch wird erreicht, daß ein von einem Permanentmagneten 39 erfaßter Kronenkorken 3 vollständig in den Bereich 38 hineingezogen und somit auch einwandfrei am Ende 41'' der Führungsfläche 41' vorbei in den Kanal 29 gefördert werden kann, ohne daß es an diesem Ende 41'' des Führungsstücks 41 zu einem Kronenkorkenstau kommt.

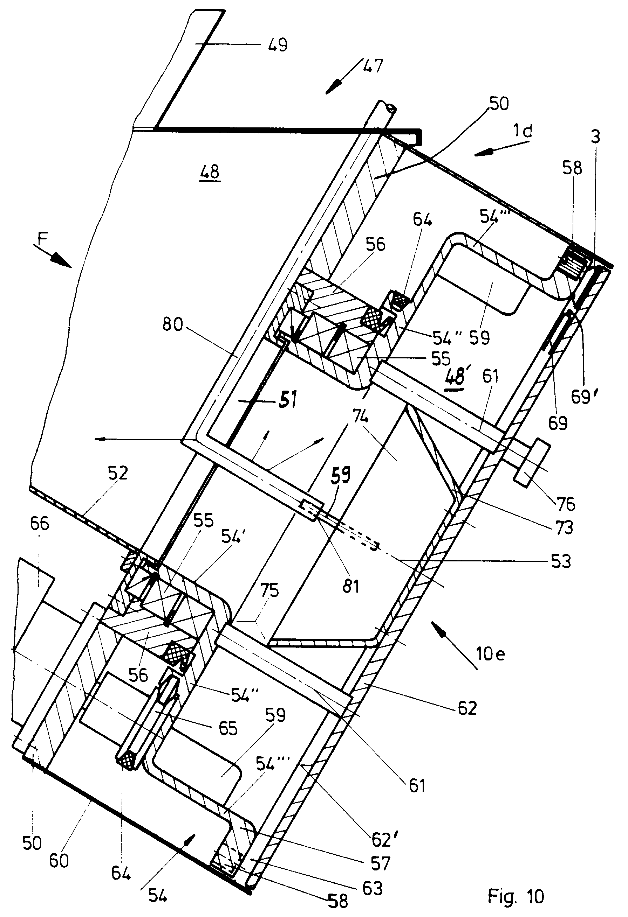

Die Fig. 10 bis 12 zeigen ein Kronenkorkenmagazin 1d mit einem trichterartigen Behälter 47 mit einem Magazinraum 48 zur Aufnahme einer Vielzahl von Kronenkorken 3 sowie mit einer Öffnung 49 zum Einbringen dieser Kronenkorken 3 in den Magazinraum 48. An einer Seite ist der Magazinraum 48 durch eine gegenüber der Vertikalen geneigte Platine 50 begrenzt, die eine kreisförmige Öffnung 51 aufweist, welche mit dem unteren Teilbereich ihres Randes fluchtend mit der konvex gewölbten Innenfläche eines Bodenbereichs 52 des Behälters 47 liegt, d.h. der Bodenbereich 52 umschließt kreisbogenförmig die gegenüber der Vertikalen ebenfalls geneigte Achse 53 der Öffnung 51.

An der dem Magazinraum 48 abgewandten Seite der Platine 50 ist um die Achse 53 ein Rad 54 drehbar gelagert, und zwar an einem unmittelbar an der Öffnung 51 vorgesehenen kreiszylinderförmigen Flansch 54' mittels Kugellager 55 und eines ringförmigen Lagerträgers 56 an der Platine 50. Der Abschnitt 54' ist so ausgebildet, daß er mit seiner Innenfläche fluchtend mit der Innenfläche der Öffnung 51 liegt.

Das Rad 54 besteht weiterhin aus einem über die Umfangsfläche des Abschnittes 54 radial wegstehenden scheibenartigen Abschnitt 54'', der an seinem radial außen liegenden Bereich in einen die Achse 53 konzentrisch umschließenden kreiszylinderförmigen oder napfartigen Abschnitt 54''' übergeht, welcher von der dem Abschnitt 54' abgewandten Seite des Abschnitt 54'' wegsteht. An den dem Abschnitt 54'' entferntliegenden Rand des Abschnittes 54''' ist das Rad 54 mit einem radial nach außen wegstehenden ringförmigen Flansch 57 versehen, der bei der dargestellten Ausführungsform einstückig mit den übrigen Elementen des Rades 54 hergestellt ist, die Achse 53 konzentrisch umschließt und in gleichmäßigen Abständen mit einer Vielzahl von Permanentmagneten 58 versehen ist. Dies weisen bei dem Kronenkorkenmagazin 1d einen gegenseitlichen Abstand voneinander auf, der gleich dem Durchmesser der Kronenkorken 3 oder kleiner ist. Anstelle einer Vielzahl von Permamentmagneten 58 kann auch ein einziger, ringförmiger Permanentmagnet verwendet sein, der im Flansch 57 in geeigneter Weise gehalten ist. Zumindest im Bereich des Flansches 57 besteht das Rad 54 aus einem nicht ferromagnetischen Material.

Am Übergang zwischen den Abschnitten 54'' und 54''' ist das Rad 54 an der Innenseite mit einer Vielzahl von flügel- oder lamellenartigen Rippen 59 versehen, die in den vom Rad 54 unschlossenen Raum 48' hineinragen.

An der Platine 50 ist ein kreiszylinderförmiges, die Achse 53 sowie auch das Rad 54 konzentrisch umschließendes Gehäuse 60 vorgesehen. Der Innendurchmesser des Gehäuses 60 ist so gewählt, daß es mit seiner Innenfläche die äußere Umfangsfläche des Flansches 57 mit einem geringen Abstand umschließt.

Mittels mehrerer, um die Achse 53 gleichmäßig verteilter und parallel zu dieser Achse angeordneter Bolzen 61 ist am Rad 54 eine kreisscheibenförmige Platte 62 befestigt, und zwar derart, daß diese Platte mit ihrer kreisförmigen Umfangsfläche die Achse 53 ebenfalls konzentrisch umschließt und mit ihrer Innenfläche 62' von der der Platte 62 zugewandten Ringfläche 57' des Flansches 57 beabstandet ist, so daß zwischen dem Umfangsbereich der Platte 52 und der Ringfläche 57' ein außen durch das Gehäuse 60 begrenzter ringförmiger Spalt 63 gebildet ist, dessen axiale Breite in einer Richtung parallel zur Achse 53 etwas größer ist als die Höhe der Kronenkorken 3, auf jeden Fall jedoch kleiner ist als der Durchmesser dieser Kronenkorken 3, und dessen radiale Breite durch die entsprechende Ausbildung des Flansches 57 etwas größer ist als der Durchmesser der Kronenkorken 3.

Über einen Keilriemen 64 ist das an einem außen liegenden Bereich des Abschnittes 54'' als Keilriemenrad ausgebildete Rad 54 von einem Keilriemenrad 65 eines an der Platine 50 unterhalb des Bodenbereichs 52 angeordneten Antriebs 66 (Getriebemotor) angetrieben. Mit dem angetriebenen Rad 54 läuft auch die von dem Gehäuse 60 konzentrisch umschlossene Platte 62 um. Die zylinderförmig ausgebildeten Permanentmagneten 58 bewegen sich dabei mit ihren parallel zur Achse 53 angeordneten Achsen auf einer die Achse 53 konzentrisch umschließenden Bewegungsbahn 67, deren Abstand von der Innenfläche des Gehäuses 60 und damit von der radial außen liegenden Begrenzung des Spaltes 63 kleiner ist als der halbe Durchmesser der Kronenkorken 3.

Im oben liegenden Bereich der Bewegungsbahn 67 bzw. am dortigen Übergang 70 mündet tangential in den Spalt 63 ein Verschlußkanal 68, der wiederum einen rechteckförmigen Innenquerschnitt aufweist. Dort, wo der Verschlußkanal 68 in den Spalt 63 mündet, liegen die beiden größeren Querschnittsseiten des Verschlußkanales in etwa fluchtend mit der Innenfläche 62' der Platte 62 bzw. mit der Ringfläche 57'. Eine der beiden schmäleren Querschnittsseiten liegt am Übergang 70 fluchtend und in etwa fluchtend mit der äußeren Begrenzungsfläche des Spaltes 63, d.h. mit der Innenfläche des Gehäuses 60. Die andere, schmälere Querschnittsseite des Verschlußkanales 68 bildet wiederum die Fortsetzung der bezogen auf die Achse 53 außen liegenden Seite bzw. Führungsfläche 69' eines dem Führungsstück 41 in seiner Funktion entsprechenden, allerdings bei dem Kronenkorkenmagazin 1d dreieckförmig oder segmentartig ausgebildeten Führungsstückes 69. Das Führungsstück 69, welches am Übergang 70 zwischen dem Spalt 63 und dem Verschlußkanal 68 vorgesehen ist, weist an seinem freien Ende eine Rolle 71 auf, die um eine Achse parallel zur Achse 53 frei drehbar gelagert ist und denjenigen Bereich bildet, mit dem die mit dem Rad 54 bzw. mit dem Flansch 57 mitgeführten Kronenkorken 3 am Übergang 70 vor dem Einführen in den Verschlußkanal 68 zuerst in Berührung kommen. Durch die Rolle 71 wird das Einführen der Kronenkorken 3 in den Verschlußkanal 68 erleichtert.

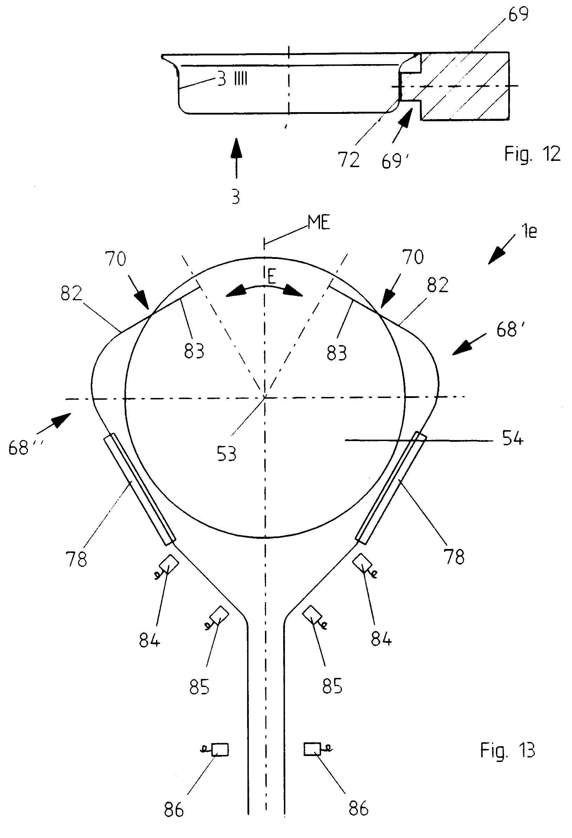

Um die Reibung der Kronenkorken 3 an der Führungsfläche 69 zu reduzieren, weist das Führungsstück 69 an der Führungsfläche 69' den in der Fig. 12 dargestellten Querschnitt auf, d.h. in der Mitte besitzt die Führungsfläche 69 einen stegartigen, sich in Längsrichtung der Führungsfläche erstreckenden Vorsprung 72, gegen welchen die Kronenkorken 3 mit dem glatten Umfangsbereich 3'''' anliegen. In gleicher Weise ist auch die Rolle 71 an ihrer Umfangsfläche ausgebildet, d.h. die Rolle 71 besitzt an ihrer Umfangsfläche das gleiche Querschnittsprofil wie die Führungsfläche 69.

Durch die Öffnung 51 gelangt eine bestimmte Menge an Kronenkorken 3 aus dem Magazinraum 48 in das Innere des Rades 54 (Raum 48'), und zwar derart, daß insbesondere im unteren Bereich der Spalt 53 mit Kronenkorken 3 gefüllt ist. Um eine zu große Dichte an Kronenkorken 3 innerhalb des Raumes 48' am Übergang zum Spalt 63 und damit insbesondere auch ein gegenseitiges Verklemmen der Kronenkorken 3 zu vermeiden, ist an der Innenfläche 62' ein kegelstumpfförmiger Körper 73 mit seinem Boden derart befestigt, daß dieser Körper achsgleich mit der Achse 53 angeordnet ist und mit seinem offenen Rand bezogen auf die Achse 53 der Innenfläche des Rades 54 am Übergang zwischen den Abschnitten 54' und 54'' axial beabstandet so gegenüberliegt, daß zwischen der Innenfläche des Rades 54 und dem Rand 74 ein die Achse 53 umschließender ringförmiger Spalt 75 für den Durchtritt der Kronenkorken 3 gebildet ist. Die Breite dieses Spaltes 75 ist so gewählt, daß während des Betriebes des Kronenkorkenmagazins 1d eine ausreichend große Anzahl von Kronenkorken 3 in den den Körper 73 umschließenden Teil des Raumes 48' und damit in den Spalt 63 gelangen kann, ohne daß es zu einem gegenseitigen Verklemmen der Kronenkorken 3 kommt.

Mit Hilfe manuell lösbarer Halteschrauben 56 kann die Platte 62 beispielsweise zum Beheben von Störungen, für Reinigungszwecke usw. von dem Rad 54 abgenommen werden.

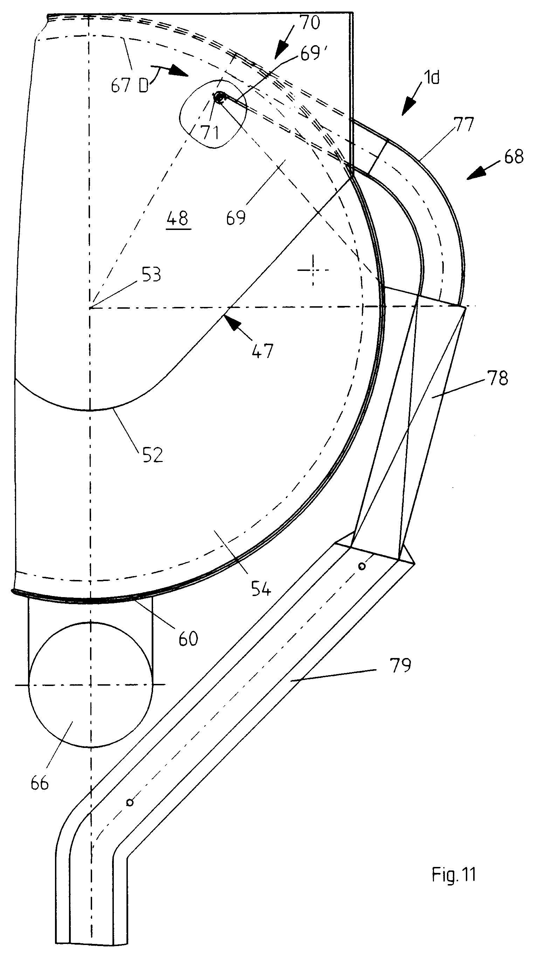

Wie in der Fig. 11 dargestellt ist, ist der Verschlußkanal 68 nach dem Übergang 70 über ein bogenförmig gekrümmtes Teilstück 77 zunächst nach unten geführt. An das Teilstück 77 schließt sich eine Wendespirale 78 an, die von richtig orientierten Kronenkorken ohne Änderung passiert wird und in der flasch orientierte Kronenkorken gewendet werden. An die Wendespirale 78 schließt sich dann das an die Verschlußaufgabeposition der Verschließmaschine führende Teilstück 79 des Verschlußkanales 68 an.

Während des Betriebes des Kronenkorkenmagazins 1d werden diejenigen Kronenkorken 3, die in den Spalt 63 gelangt sind durch das vom Antrieb 66 in Richtung des Pfeiles D umlaufend angetriebene Rad 54 bzw. durch die am Flansch 57 vorgesehenen Permanentmagneten 68 mitgeführt und dann am Übergang 70 durch die Führungsfläche 69' in den Verschlußkanal 68 geleitet, wobei die jeweils nachfolgenden Kronenkorken 3 die vorausgehenden weiterschieben, bis diese völlig aus dem Wirkungsbereich der umlaufenden Permanentmagnete 58 in den Verschlußkanal 68 gelangt sind. Durch die oben beschriebene, spezielle Ausbildung der Führungsfläche 69 ist dies ohne Störung mit hoher Leistung möglich. Das Rad 54, die Scheibe 62 und das Führungsstück 69 bilden bei dem Kronenkorkenmagazin 1d die wesentlichen Elemente der Vorrichtung 10e zum Einführen der Kronenkorken 3 aus dem Magazinraum 48 in den Verschlußkanal 68.

Mit 80 ist in der Fig. 10 eine Leitung bezeichnet, die bei einer Reinigung (CIP-Reinigung) des Kronenkorkenmagazins 1d zum Zuführen einer Reinigungsflüssigkeit dient und an ihrem Ende eine Austrittsöffnung 81 für die Reinigungsflüssigkeit aufweist. Die Austrittsöffnung 81 ist bei der dargestellten Ausführungsform im Bereich der Achse 53 und dem Boden des kegelstumpfförmigen oder napfartigen Körpers 73 gegenüberliegend vorgesehen.

Beim Reinigen wird mit der aus der Öffnung 81 austretenden Flüssigkeit der Raum 48', die Innenfläche 62' der Platte 62 sowie insbesondere auch sämtliche Flächen des Spaltes 63 gereinigt. Durch einen Spalt zwischen der Umfangsfläche der Platte 62 und der Innenfläche des Gehäuses 60 kann die Reinigungsflüssigkeit in eine unterhalb des Gehäuses 60 angeordnete, in den Figuren nicht dargestellte Auffangschale abfließen.

Durch die Rippen 59, aber auch durch die Bolzen 61 wird beim Umlaufen des Rades 54 eine Auflockerung der Kronenkorken 3 innerhalb des Raumes 48' erreicht, wodurch sichergestellt ist, daß jeweils eine genügende Anzahl von Kronenkorken 3 in den Spalt 63 gelangt.

Die Fig. 13 zeigt ein Kronenkorkenmagazin 1e, welches sich von dem Kronenkorkenmagazin 1d lediglich nur dadurch unterscheidet, daß anstelle eines einzigen Verschlußkanales 68 zwei Verschlußkanäle 68' und 68'' vorgesehen sind, und zwar beidseitig von einer die Achse 53 einschließenden gedachten vertikalen Mittelebene ME. Am Übergang 70 ist jeder Verschlußkanal 68' und 68'' in seinem dortigen, dem Teilstück 77 entsprechenden Teilstück 82 und dem dortigen, dem Führungsstück 69 entsprechenden Führungsstück 83 aus einer Stellung, in der das Führungsstück 83 in der Bewegungsbahn der mit dem Rad 54 mitgeführten Kronenkorken 3 liegt, in eine nicht wirksame Stellung radial nach außen schwenkbar, in der das Führungsstück 83 außerhalb der Bewegungsbahn der mit dem Rad 54 mitgeführten Kronenkorken angeordnet ist. Weiterhin unterscheidet sich das Kronenkorkenmagazin 1e vom Kronenkorkenmagazin 1d dadurch, daß durch den Antrieb 66 das Rad 54 in beiden Richtungen antreibbar ist (Doppelpfeil E).

Das Kronenkorkenmagazin 1e wird beispielsweise so betrieben, daß der Verschlußkanal 68'' erst zum Einsatz kommt, wenn in dem normalerweise verwendeten Verschlußkanal 68' eine Störung auftritt. Bei Inbetriebnahme wird zunächst der Verschlußkanal 68'' mit Kronenkorken 3 gefüllt. Hierfür ist das Teilstück 82 des Verschlußkanales 68'' in die wirksame Stellung und das Teilstück 82 des Verschlußkanales 68' in die unwirksame Stellung geschwenkt. Das Rad 54 wird durch den Antrieb 66 bei der für die Fig. 13 gewählten Darstellung im Gegenuhrzeigersinn angetrieben. Ist der Verschlußkanal 68 ausreichend mit Kronenkorken 3 gefüllt, wird das Teilstück 62 dieses Kanals in die nicht wirksame Stellung und das Teilstück 82 des Verschlußkanals 68' in die wirksame Stellung geschwenkt. Durch das nunmehr im Uhrzeigersinn angetriebene Rad 54 werden die Kronenkorken 3 dem Verschlußkanal 68 und über diesen der Verschlußabgabeposition der Verschließmaschine zugeführt.

Bei auftretenden Störungen wird sofort auf den Verschlußkanal 68'' umgeschaltet, d.h. die Versorgung mit Kronenkorken kann ohne Unterbrechung über diesen Verschlußkanal erfolgen, da er bereits mit Kronenkorken 3 gefüllt ist.

Zur Steuerung und Überwachung sind an jedem Verschlußkanal 68' und 68'' unterhalb der Wendespirale 78 jeweils drei Sensoren 84, 85 und 86 vorgesehen, und zwar der Sensor 84 unmittelbar auf die Wendespirale 78 folgend, der Sensor 86 im unteren Teil des Verschlußkanales 68' bzw. 68'' kurz vor der Verschlußabgabeposition und vor einer nicht dargestellten Sperre und der Sensor 85 zwischen den Sensoren 84 und 86. Die Steuerung durch die Sensoren 84 - 86, die bevorzugt Nährungsschalter sind, erfolgt derart, daß immer dann, wenn der Sensor 85 in dem verwendeten Verschlußkanal 68' bzw. 68'' durch Kronenkorken 3 nicht mehr belegt ist, der Antrieb 66 für das Rad 45 eingeschaltet wird. Dieser Antrieb wird dann abgeschaltet, wenn der Sensor 84 von Kronenkorken ständig belegt ist.

Dem Sensor 86 wird die Bewegung der Kronenkorken 3 im unteren Teil des Verschlußkanales 68' bzw. 68'' überwacht, d.h. dann, wenn der Sensor 86 in dem verwendeten Verschlußkanal keine sich vorbeibewegenden Kronenkorken feststellt, liegt eine Störung vor und der Sensor 86 veranlaßt ein entsprechendes Signal. Die Sensoren 84 - 86 können auch am Kanal 68 vorgesehen sein.

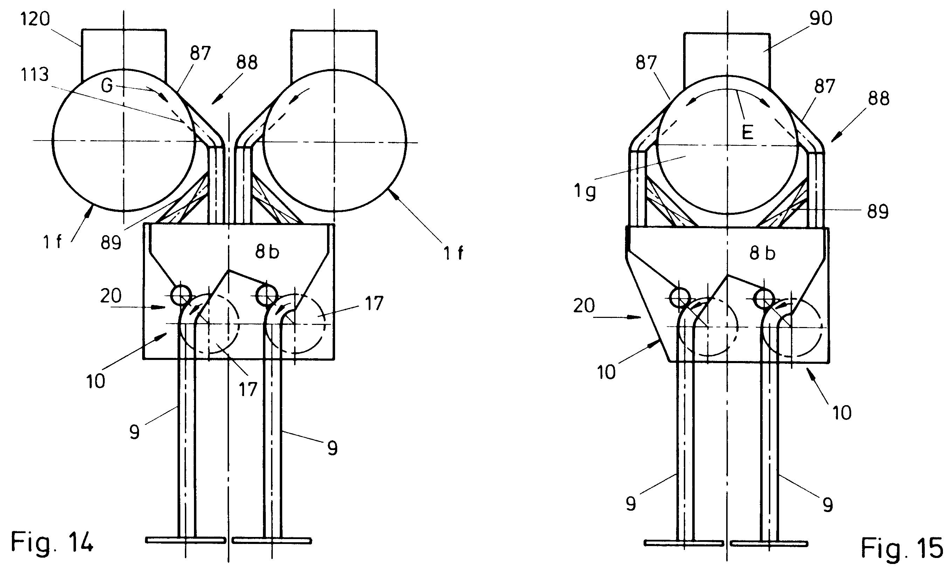

Die Fig. 14 zeigt eine Anordnung, die aus zwei Korkenmagazinen 1f und einem für beide Korkenmagazine gemeinsamen Sammelraum 8b besteht. Die Ausgänge 87 der beiden Korkenmagazine 1f sind jeweils über einen vertikalen Verschlußkanal 88, der auch eine Wendespirale 89 aufweist, mit dem Sammelraum 8b verbunden. Der Sammelraum 8b besitzt zwei Ausgänge, mit jeweils einen sich daran anschließenden vertikalen Verschlußkanal 9. Am Übergang 20 zwischen dem Sammelraum und einem Verschlußkanal 9 ist jeweils eine Vorrichtung 10 vorgesehen, und zwar derart, daß die Scheiben 17 dieser Vorrichtungen in gleichem Sinne umlaufen.

Während des Betriebes werden beispielsweise ein Kronenkorkenmagazin 1f sowie ein Verschlußkanal 9 verwendet. Treten beispielsweise Störungen in diesem Verschlußkanal 9 auf, so wird auf den anderen Verschlußkanal 9 umgeschaltet, und zwar gesteuert durch nicht dargestellte, die Kronenkorken 3 erfassende Sensoren sowie Verschließelemente an den Verschlußkanälen 9. Tritt beispielsweise eine Störung in dem verwendeten Kronenkorkenmagazin 1f bzw. in dem zugehörigen Verschlußkanal 88 auf oder ist das verwendete Kronenkorkenmagazin 1f gelehrt, so wird ebenfalls sensorgesteuert auf das andere Kronenkorkenmagazin 1f umgeschaltet. Bei höheren Leistungen können auch beide Kronenkorkenmagazine 1f parallel betrieben werden.

Bei der Anordnung gemäß Fig. 14 weisen die beiden Kronenkorkenmagazine 1f jeweils nur eine Förderrichtung auf.

Fig. 15 zeigt eine Anordnung, mit einem Korkenmagazin 1g, welches dem Korkenmagazin 1f in konstruktiver Hinsicht weitestgehend entspricht, jedoch ähnlich dem Korkenmagazin 1e zwei Ausgänge 87 und eine umkehrbare Förderrichtung aufweist, wie dies in der Fig. 15 wieder mit dem Doppelpfeil E angedeutet ist. An jeden Ausgang 87 ist ein Verschlußkanal 88 mit Wendespirale 89 angeschlossen. Die Verschlußkanäle münden in den Sammelraum 8b, an welchem sich wiederum die beiden Verschlußkanäle 9 anschließen, und zwar über die an den Übergängen 20 vorgesehenen Vorrichtungen 10.

Es versteht sich, daß bei den in den Figuren 14 und 15 dargestellten Anordnungen anstelle der Vorrichtungen 10 auch andere Vorrichtungen, beispielsweise die Vorrichtungen 10b oder 10e zum Überführen der Kronenkorken 3 aus dem Sammelraum 8b in den jeweiligen Verschlußkanal 9 vorgesehen sein können.

Beiden Korkenmagazinen 1f und 1g ist gemeinsam, daß sie an der Oberseite jeweils ein schachtartiges, am oberen Ende offenes Hilfsmagazin bzw. einen entsprechenden Ausweichspeicher 90 aufweisen, der im normalen Betrieb leer oder weitestgehend leer ist. Bei Störungen oder dann, wenn die an dem verwendeten Ausgang 87 des Korkenmagazins 1f bzw. 1g geförderten Kronenkorken 3 nicht oder nicht in genügender Menge über den Verschlußkanal 88 abgeführt werden, kann der betreffende Ausweichspeicher 90 eine bestimmte Anzahl von Kronenkorken aufnehmen. Die Ausweichspeicher 90 sind dabei jeweils so ausgebildet, daß die Kronenkorken 3 in diesen Speichern diejenige Orientierung aufweisen und beibehalten, die für den Eintritt in den Verschlußkanal 88 notwendig ist. Dies hat den Vorteil, daß die im Ausweichspeicher 90 vorhandenen Kronenkorken 3 sofort und ohne Verzögerung in den Verschlußkanal 88 weitergeleitet werden, wenn die Störung behoben ist. Der Ausweichspeicher 90 ist bevorzugt geschlossen ausgeführt.

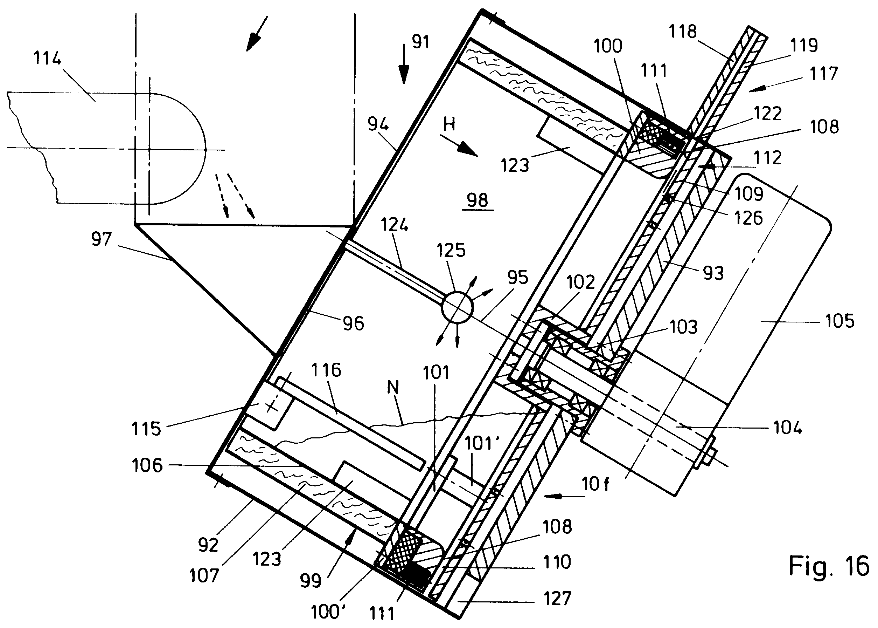

Das in der Fig. 16 im Detail dargestellte Korkenmagazin 1f besteht u.a. aus einem Gehäuse 91 mit kreiszylinderförmiger Umfangswand 92, mit einem von einer Platte 93 gebildeten Boden sowie mit einer oberen Abschlußwand 94. Mit Hilfe der Platte 93 ist das Gehäuse 91 an einem ortsfesten Teil einer Verschließmaschine derart befestigt, daß die Achse 95 des Gehäuses 91 gegenüber der Vertikalen geneigt ist. In der oberen Abschlußwand 94 ist eine Öffnung 96 vorgesehen, an die sich nach außen hin ein Trichter zum Einfüllen von Kronenkorken 3 in einen im Inneren des Gehäuses 91 gebildeten Magazinraum 98 vorgesehen ist, und zwar innerhalb einer Trommel 99, die an ihrer Ober- und Unterseite offen und um ihre achsgleich mit der Achse 95 angeordnete Mittelachse im Gehäuse 91 drehbar gelagert ist. Im einzelnen besteht die Trommel 99 aus einem die Achse 95 konzentrisch umschließenden kreisförmigen Ring 100, der mit seiner axial außen liegenden Fläche der Innenfläche der Umfangswand 92 mit geringem Abstand benachbart ist, und der an seiner der Platte 93 entfernt liegenden Seite mit mehreren, beispielsweise mit vier radial zur Achse 95 und um diese Achse gleichmäßig verteilten Speichen 101 versehen ist.

Bei der dargestellten Ausführungsform ist der Ring 100 einstückig mit den Speichen 101 hergestellt, die mit ihren radial außenliegenden Enden in den Ring 100 übergehen und an ihren radial innenliegenden Enden jeweils an einem Ende eines Distanzbolzens 101' befestigt sind. Die Distanzbolzen 101' sind im gleichen radialen Abstand von der Achse 95 vorgesehen und mit ihren Achsen parallel zur Achse 95 angeordnet. Am anderen Ende ist jeder Distanzbolzen 101' an einer Scheibe 109 befestigt, die mit ihrer Achse achsgleich mit der Achse 95 liegend mit einer Nabe 102 auf einem Ende einer Welle 104 befestigt ist, die achsgleich mit der Achse 95 in einem Lager 103 an der Platte 93 drehbar gelagert ist. Die Welle 104 steht mit ihrem anderen Ende über die dem Magazinraum 98 abgewandte Außenfläche der Platte 93 vor und ist dort mit einem Antrieb 105 antriebsmäßig verbunden.

Auf der der Platte 93 abgewandten Seite des Ringes 100 ist ein Hilfsring 100' in geeigneter Weise, beispielsweise durch nicht dargestellte Schrauben gehalten. An diesem Hilfsring 100', der die Achse 95 konzentrisch umschließt und mit seiner inneren kreisförmigen Ringfläche fluchtend mit der entsprechenden inneren Ringfläche des Ringes 100 liegt, ist ein ring- bzw. kreisförmiges Wandelement 106 befestigt. Dieses Wandelement 106 umschließt die Achse 95 ebenfalls konzentrisch, liegt mit seiner radial innenliegenden Fläche fluchtend mit der radial innenliegenden Fläche des Ringes 100 und des Hilfsringes 100' und reicht mit seinem dem Ring 100 entfernt liegenden Rand bis in den Bereich der Abschlußwand 94, d.h. dieser Rand besitzt von der Innenfläche der Abschlußwand 94 einen geringen Abstand. Das Wandelement 106 ist bei der dargestellten Ausführungsform doppelwandig ausgeführt und bildet eine nach außen hin vollständig geschlossene Kammer 107, die mit einem Material zur Lärmdämmung bzw. mit einem Antidröhnmaterial ausgefüllt ist. Bei der dargestellten Ausführungsform ist die Kammer 107 beispielsweise mit Sand gefüllt. Anstelle der doppelwandigen Ausbildung des Wandelementes 106 kann auch ein entsprechendes, nur einlagiges Wandelement vorgesehen und an seiner Außenfläche mit einer Beschichtung und/oder Ummantelung aus einem lärmdämmenden Material bzw. Antidröhnmaterial versehen sein. Diese Beschichtung bzw. Ummantelung ist dann beispielsweise unter Verwendung eines elastischen oder gummiartigen Materials (z.B. Gummi oder Kunststoff) mit relativ hohem spezifischem Gewicht gebildet.

Der der Platte 93 zugewandten Stirnfläche 108 des Ringes 100 gegenüberliegend und von dieser Stirnfläche 108 beabstandet ist an der Habe 102 die Scheibe 109 befestigt, die eine kreisförmige Umfangsfläche aufweist. Die Scheibe 109 reicht mit ihrer Umfangsfläche bis in den Bereich der Innenfläche der Umfangswand 92, d.h. die Umfangsfläche der Scheibe 109 besitzt einen geringfügigen Abstand von der Innenfläche der Umfangswand 92. Wie die Fig. 16 auch zeigt, ist durch die Habe 102 sowie die Scheibe 109 das Lager 103 vom Magazinraum 98 her gesehen völlig abgedeckt.

Durch den Abstand zwischen der Stirnfläche 108 und der dieser Stirnfläche zugewandten flachen Seite der Scheibe 109 ist im Bereich der Stirnfläche 108 ein dem Spalt 63 entsprechender ringförmiger Spalt 110 gebildet, dessen axiale Breite in Richtung parallel zur Achse 95 etwas größer ist als die Höhe der Kronenkorken 3, auf jeden Fall jedoch kleiner ist als der Durchmesser dieser Kronenkorken 3, und dessen radiale Breite etwas größer ist als der Durchmesser der Kronenkorken 3.

Am Ring 100 sind mehrere Permanentmagnete 111 mit jeweils gleichem radialen Abstand von der Achse 95 sowie in gleichen Winkelabständen um die Achse 95 verteilt vorgesehen. Der radiale Abstand der Permanentmagnete 111, die jeweils an der Stirnfläche 108 wirksam sind, ist von der Achse 95 so gewählt, daß die parallel zur Achse 95 angeordneten Mittelachsen der Permanentmagnete 111 auf einer die Achse 95 konzentrisch umschließenden kreisförmigen Bewegungsbahn umlaufen, deren Abstand von der Innenfläche der Umfangswand 92 kleiner ist als der halbe Durchmesser der Kronenkorken 3.

Im oben liegenden Bereich der Bewegungsbahn, auf der die Permanentmagneten 111 bzw. deren Mittelachsen umlaufen, bzw. am dortigen Übergang 112 ist der Ausgang 87 gebildet, d. h. dort mündet in den Spalt 110 tangential der Verschlußkanal 88, der wiederum einen rechteckförmigen Innenquerschnitt aufweist. Am Ausgang 87 liegen die beiden größeren Querschnittsseiten des Verschlußkanales in etwa fluchtend mit der Stirnfläche 108 bzw. mit der dieser Stirnfläche 108 zugewandten Fläche der Scheibe 109. Eine der beiden schmäleren Querschnittsseiten liegt am Ausgang 87 in etwa fluchtend mit der äußeren Begrenzungsfläche des Spaltes 110, d.h. mit der Innenfläche der Umfangswand 92. Die andere der beiden schmäleren Querschnittsseiten des Verschlußkanals 88 liegt am Ausgang 87 bzw. am Übergang 112 bezogen auf die Achse 95 radial nach innen versetzt, und zwar in etwa fluchtend mit der radial außen liegenden Seite oder Führungsfläche eines dem Führungsstück 69 entsprechenden Führungsstückes 113. Das Führungsstück 113 ist bevorzugt identisch mit dem Führungsstück 69 ausgebildet.

Während des Betriebes des Korkenmagazins 1f befindet sich im unteren Teil des Magazinraumes 98 eine ausreichende, ungeordnete Menge an Kronenkorken 3. Insbesondere auch aufgrund der trichterartigen Struktur, die die Trommel 99 sowie die Platte 109 aufgrund der Neigung der Achse 95 bilden, gelangt bei durch den Antrieb 105 in Richtung des Pfeiles G (Fig. 14) um die Achse 95 angetriebener Trommel 99 und Scheibe 109 eine bestimmte Anzahl von Kronenkorken 3 in den Spalt 110. Diese Kronenkorken werden mit den am Ring 100 vorgesehenen Permanentmagneten 111 mitgeführt und gelangen dann am Übergang 112 in den Verschlußkanal 88.

Während des Betriebes werden in den Magazinraum 89 über die Öffnung 96 und den Trichter 97 ständig Kronenkorken nachgefüllt, und zwar beispielsweise unter Verwendung eines förderbandartigen Zuförderers 114. Das Zuführen der Kronenkorken 3 in den Magazinraum 98 wird mittels eines Signalgebers 115 überwacht, der bei der dargestellten Ausführungsform als mit einem Arm 116 versehener Schalter ausgebildet ist und immer dann den Antrieb für den Zuförderer 114 abschaltet, wenn die im Magazinraum 98 befindliche ungeordnete Menge an Kronenkorken 3 ein Niveau N erreicht hat, und den Antrieb für den Zuförderer 114 dann wieder einschaltet, wenn dieses Niveau N um einen vorgegebenen Betrag unterschritten ist.

Im oberen Bereich und in Drehrichtung G teilweise vor dem Übergang 112, aber zumindest teilweise im Bereich des Führungsstückes 113 ist an der Außenfläche des Gehäuses 91 bzw. der Umfangswand 92 der oben bereits erwähnte Ausweichspeicher 90 vorgesehen. Dieser besteht im wesentlichen aus einem Schacht 117, der zwischen zwei voneinander beabstandeten Platten 118 und 119 gebildet und nach außen hin völlig geschlossen ist. Die beiden Platten 118 und 119, die radial über die Außenfläche der Umfangswand 92 wegstehen, liegen jeweils in Ebenen senkrecht zur Achse 95, und zwar derart, daß die Platte 118 mit ihrer den Schacht 117 begrenzenden Fläche etwa in einer Ebene mit der Stirnfläche 108 des Ringes 100 und die Platte 119 mit ihrer den Schacht 117 begrenzenden Fläche in etwa in einer Ebene mit der dem Ring 100 zugewandten Seite der Scheibe 109 liegt. Die Breite des Schachtes 117 in der Achsrichtung parallel zur Achse 95 ist gleich der entsprechenden Breite des Spaltes 110.

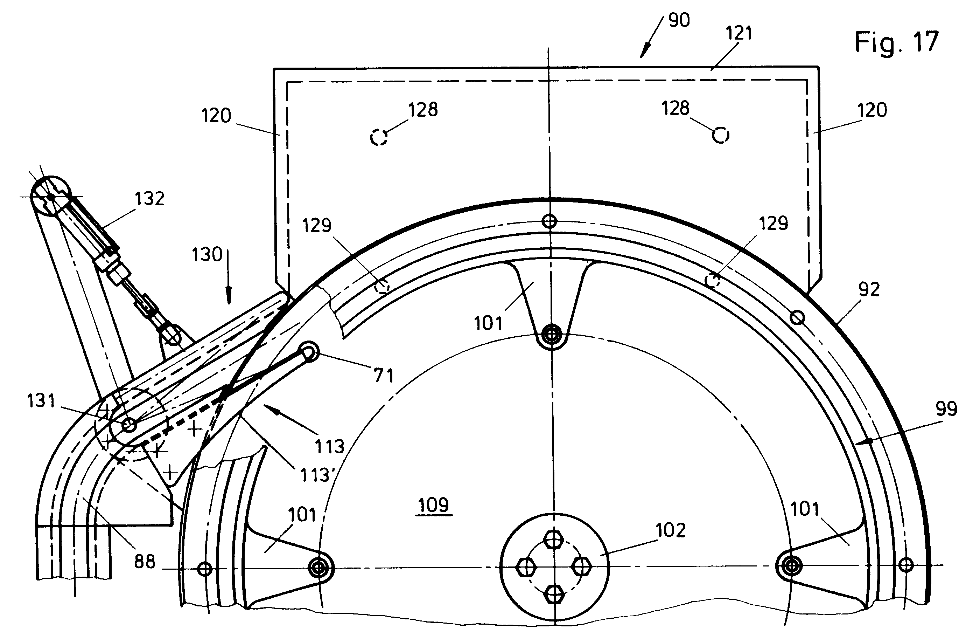

Wie den Figuren 16 und 17 zu entnehmen ist, weist der im Querschnitt rechteckförmige Schacht 117 in Drehrichtung G eine Breite auf, die sehr viel größer ist als der Abstand zwischen den beiden Platten 118 und 119. An den beiden, in Drehrichtung G gegeneinander versetzten Schmalseiten ist der Schacht 117 jeweils durch einen Wandabschnitt 120 und an der radial außen liegenden Oberseite durch einen Wandabschnitt 121 verschlossen.

Im Bereich des Ausweichspeichers 90 ist die Umfangswand 92 mit einem Schlitz 122 versehen, der sich konzentrisch zur Achse 95 erstreckt und über den der Schacht 117 über seine gesamte Breite mit dem Spalt 110 in Verbindung steht, so daß in der oben beschriebenen Weise bei eventuellen Störungen oder Verzögerungen beim Abfördern der Kronenkorken 3 über den Verschlußkanal 88 überschüssige Kronenkorken 3 von dem Ausweichspeicher 90 bzw. dem dortigen Schacht 117 aufgenommen werden können, und zwar derart, daß die Orientierung, die die Kronenkorken 3 im Spalt 110 hatten, nicht verlorengeht.

Um eine Auflockerung der Kronenkorken im Magazinraum 98 zu erreichen, sind an der Trommel 99 innen, und zwar an der Innenfläche des Wandelementes 106 rippen- bzw. flügelartige Elemente 123 dort vorgesehen, wo dieses Wandelement 106 in den Ring 100 übergeht. Die flügelartigen Elemente 123 sind auch jeweils mit einer Speiche 101 verbunden und bewirken somit zusätzlich eine mechanische Versteifung der Trommel 99.

In der Fig. 16 ist weiterhin eine Leitung 124 dargestellt, die bei einer Reinigung (CIP-Reinigung) des Kronenkorkenmagazins 1f zum Zuführen einer Reinigungsflüssigkeit dient. An dem sich im Bereich der Achse 95 im Magazinraum 98 befindlichen Ende weist die Leitung einen Sprühkopf 125 auf, der eine Vielzahl von Sprüh- bzw. Austrittsöffnungen insbesondere für einen radialen sowie für einen auf die Scheibe 109 gerichteten Austritt der Reinigungsflüssigkeit aufweist. Um auch die Scheibe 109 an ihrer Rückseite sowie die Platte 93 an ihrer der Scheibe 109 zugewandten Seite zu reinigen, ist die Scheibe 109 mit Durchtrittsöffnungen 126 versehen. Die Scheibe 109 kann auch aus einem gelochten Material hergestellt sein.

Die Trommel 99, die Scheibe 109 und das Führungsstück 113 bilden bei dem Kronenkorkenmagazin 1f die wesentlichen Elemente der Vorrichtung 10f zum Einführen der Kronenkorken 3 aus dem Magazinraum 98 in den Verschlußkanal 88. Zum Abführen der Reinigungsflüssigkeit besitzt das Gehäuse 91 im unten liegenden Bereich der Platte 93 noch eine Öffnung 127.

Im Bereich des Ausweichspeichers 90 sind für die Reinigung (CIP-Reinigung) noch vier weitere Düsen vorgesehen, und zwar die beiden Düsen 128, die mit ihren Austrittsöffnungen im Inneren des Schachtes 117 in der Nähe des radial außenliegenden, verschlossenen Endes (Wandabschnitt 121) dieses Schachtes 117 vorgesehen sind sowie die beiden Düsen 129, die an der Platte 93 in der Nähe des Schlitzes 122 vorgesehen sind, und zwar derart, daß deren Austrittsöffnungen auf die Rückseite der Scheibe 109 gerichtet sind. Die Düsen 128 dienen im wesentlichen zur Reinigung des Schachtes 117, während die Düsen 129 zur Reinigung der Rückseite der Scheibe 109 dienen.

Das Führungsstück 113 ist bei der dargestellten Ausführungsform Teil eines den Verschlußkanal 88 am Ausgang 87 bildenden Verschlußkanalelementes 130, welches um eine Achse 131 schwenkbar ist, die parallel zur Achse 95 liegt und radial außerhalb der Umfangswand 92 des Gehäuses 91 angeordnet ist. Mit Hilfe eines Stellgliedes, welches bei der dargestellten Ausführungsform von einem Pneumatik-Zylinder 132 gebildet ist, ist das Verschlußkanalelement 130 um die Achse 131 aus der in der Fig. 17 dargestellten wirksamen Stellung des Führungsstückes 113, in der dieses Führungsstück 113 in den Spalt 110 hineinreicht und dadurch die mit den Permanentmagneten 111 mitgeführten Kronenkorken 3 über das Verschlußkanalelement 130 in den anschließenden Verschlußkanal 88 leitet, in eine Stellung bewegbar, in der das Führungsstück 113 radial außerhalb des Spaltes 110 liegt und damit unwirksam ist. In dieser unwirksamen Stellung bildet das Führungsstück 113 mit einer bezogen auf die Achse 95 radial innenliegenden kreisbogenförmig konvex gekrümmten Fläche 113' die Fortsetzung der Innenfläche der Umfangswand 92 und bildet damit einen Teil der Führungsfläche für die mit den Permanentmagneten 111 mitgeführten Kronenkorken 3. Es versteht sich, daß sich der Schlitz 122 auch im Bereich des Führungsstückes 113 erstreckt, d.h. letzteres durch diesen Schlitz aus der nicht wirksamen Stellung in die wirksame Stellung schwenkbar ist.

Zur Halterung der Permanentmagneten 111 ist der Ring 100 mit einer Vielzahl von Sack-Bohrungen 133 versehen, deren Achse jeweils parallel zur Achse 95 liegt und die zu der der Scheibe 109 abgewandten Seite des Ringes 100 hin offen sind. Nach dem Einsetzen der Permanentmagneten 111 in die Sack-Bohrungen 133 sind die Permanentmagneten 111 durch den Hilfsring 100' gehalten.

Allen Vorrichtungen 10, 10a - 10f ist gemeinsam, daß bei einem relativ einfachen Aufbau eine zuverlässige Arbeitsweise erreicht wird, die insbesondere auch bei geringem Geräuschpegel einen Abrieb der Kronenkorken und damit eine Staub- und Schmutzbildung vermeidet. Ein weiterer Vorteil besteht darin, daß an den Übergängen zwischen einem Verschlußkanal und dem vorausgehenden Raum, beispielsweise Magazinraum 2 oder Sammelraum 8 bzw. 8a weitestgehend glatte Durchgänge erreicht werden. Dies gilt insbesondere auch für die Vorrichtungen 10b und 10c.

Bei Verwendung der erfindungsgemäßen Vorrichtung ist es durch die glatten Durchgänge sowie durch die Vermeidung von in den Kronenkorkenförderbereich hineinragenden Aufbauten eine CIP-Reinigung des Kronenkorkenmagazins möglich.

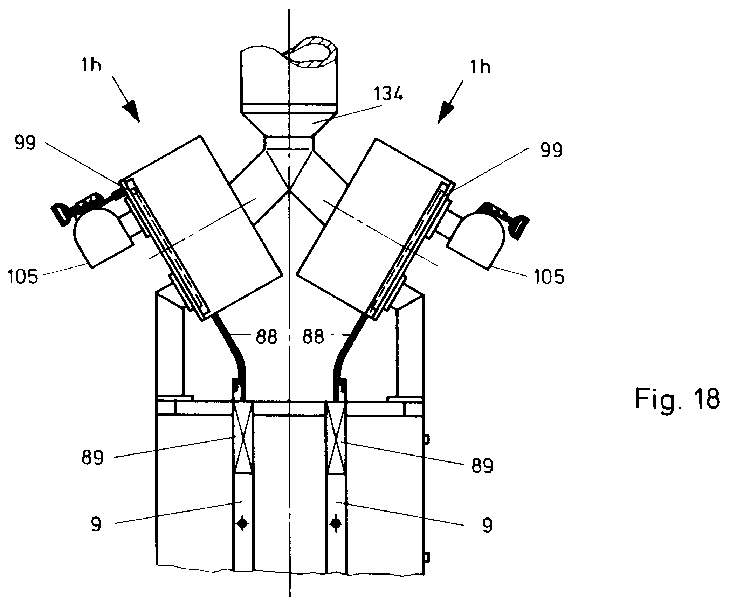

Die Fig. 18 zeigt eine Anordnung, die aus zwei Korkenmagazinen 1h besteht, die im Detail beispielsweise der Vorrichtung 10f der Fig. 16 und 17 entsprechend ausgebildet sind und jeweils eine Trommel 99 für die Verschlüsse 3 besitzen.

Jedem Magazin 1h ist ein Verschlußkanal 88 mit Wendespirale 89 zugeordnet. Der Verschlußkanal führt zu einem nicht dargestellten Sammelraum. Die Besonderheit dieser Ausführung besteht darin, daß die beiden Kronenkorkenmagazine 1h bzw. deren Trommeln 99 mit ihrer offenen Seite einander zugewandt angeordnet sind und somit über einen gemeinsamen Schacht 134 mit den Verschlüssen 3 versorgt werden können. Die beiden Magazine 1h sind von einer Steuereinrichtung beispielsweise so gesteuert, daß nur ein Magazin wirksam ist und das andere Magazin 1h dann eingeschaltet wird, wenn das eine Magazin 1h leer ist oder dieses eine Magazin 1h, der zugehörige Verschlußkanal usw. einen Defekt aufweisen.

Die Erfindung wurde voranstehend an Ausführungsbeispielen beschrieben. Es versteht sich, daß Änderungen sowie weitere Abwandlungen möglich sind, ohne daß dadurch der der Erfindung zugrundeliegende Erfindungsgedanke verlassen wird. So ist es beispielsweise möglich, anstelle von oder zusätzlich zu dem Rad 23 bzw. Segment 27 andere mechanische Elemente und/oder wenigstens eine Luftaustrittsdüse zum Auflockern vorzusehen. Weiterhin ist es auch möglich, in Verschlußkanälen 5, 9, 29, 68, 68' 68'', 88, im Ausweichspeicher 90 sowie auch zwischen dem Topf 99 und dem diesen Topf umgebenden Gehäuse 91, insbesondere in dem zwischen der Platte 93 und der Scheibe 109 gebildeten Raum Düsen für den Austritt einer Reinigungsflüssigkeit mit tiefer liegenden Ableitungen für diese Flüssigkeit vorzusehen.

In der Fig. 3 ist mit unterbrochenen Linien ein von dem Rad 23 und dem Segment 27 abweichendes Element zum Auflockern dargestellt. Bei diesem Element handelt es sich um eine Scheibe 43, die um eine parallel zur Achse 16 verlaufende Achse 44 durch einen Antrieb, beispielsweise durch den Antrieb 19 rotierend angetrieben ist, und zwar in Richtung des Pfeiles B'. Die Scheibe 43 liegt mit einer Stirn- bzw. Scheibenfläche in einer gemeinsamen Ebene mit der Stirnfläche 17' der Scheibe 17. An dem Umfang der Scheibe 43 sind in gleichmäßigen Winkelabständen verteilt mehrere Permanentmagneten 45 vorgesehen, die in Größe und Form dem Permanentmagneten 21 entsprechen und mit ihren Achsen parallel zu der Achse 44 angeordnet sind. Bei dieser Ausführung ist dann anstelle des Rades 23 eine feste Kontur vorgesehen, d.h. der Rand 14' geht über einen bogenförmig gekrümmten Bereich in die eine Querschnittsseite 9'' des Verschlußkanales 9 über. Die Achse 44 der Scheibe 43 ist so angeordnet, daß sich die Permanentmagneten 45 auf einer kreisförmigen Bewegungsbahn 46 bewegen, die teilweise im Bereich des Raumes 8, teilweise im Bereich der Platine 14 verläuft, wobei an dem im Bereich des Raumes 8 verlaufenden Teil der Bewegungsbahn 46 die Permanentmagneten 45 so bewegt werden, daß sie auf die Kronenkorken eine das Auflockern bewirkende Förderwirkung von dem Übergang 20 weg in den Raum 8 ausüben.

### Aufstellung der verwendeten Bezugsziffern

- 1, 1a, 1b,: Kronenkorkenmagazin
- 1c, 1d, 1e: Kronenkorkenmagazin
- 1f, 1g, 1h: Kronenkorkenmagazin
- 2: Magazinraum
- 3: Kronenkorken
- 3', 3'': Seite
- 3''': Rand
- 3'''': Umfangsbereich
- 4: Rührwerk
- 5: Verschlußkanal
- 6, 7: Ausgang
- 8, 8a, 8b: Sammelraum
- 9: Verschlußkanal
- 9', 9'': Querschnittsseite
- 10, 10a, 10b,: Vorrichtung
- 10c, 10d,: Vorrichtung
- 10e, 10f: Vorrichtung
- 11, 12: Platine
- 11', 12': Fläche
- 12'': Wandabschnitt
- 13, 14: Platine
- 13', 14': Rand
- 15: Bodenabschnitt
- 16: Achse
- 17, 17a: Scheibe
- 17': Stirnfläche
- 18: Ausnehmung
- 19: Antrieb
- 20: Übergang
- 21: Permanentmagnet
- 22: Bewegungsbahn
- 23: Rad
- 24: Achse
- 25: Ausnehmung
- 26: Magnetanordnung
- 27: Segment
- 28: Magazinraum
- 29: Verschlußkanal
- 30: Topf
- 31: Umfangswand
- 32: Topfachse
- 33: Ring
- 33': Unterseite
- 34: Ringwand
- 35: Halteplatte
- 36: Scheibe
- 36': Randbereich
- 37: Auflage
- 38: Teilbereich
- 39: Permanentmagnet
- 40: Übergang
- 41: Führungsstück
- 41': Führungsfläche
- 41'': Ende
- 42: Bewegungsbahn
- 43: Scheibe
- 44: Achse
- 45: Permanentmagnet
- 46: Bewegungsbahn
- 47: Behälter
- 48: Magazinraum
- 48': Raum
- 49: Öffnung
- 50: Platine
- 51: Öffnung
- 52: Bodenbereich
- 53: Achse
- 54: Rad
- 54', 54'', 54''': Abschnitt
- 55: Kugellager
- 56: Lagerträger
- 57: Flansch
- 57': Ringfläche
- 58: Permanentmagnet
- 59: Rippe
- 60: Gehäuse
- 61: Bolzen
- 62: Platte
- 62': Innenfläche
- 63: Spalt
- 64: Keilriemen
- 65: Keilriemenrad
- 66: Antrieb
- 67: Bewegungsbahn
- 68, 68', 68'': Verschlußkanal
- 69: Führungsstück
- 69': Führungsfläche
- 70: Übergang
- 71: Rolle
- 72: Vorsprung
- 73: Körper
- 74: Rand
- 75: Spalt
- 76: Befestigungsschraube
- 77: Teilstück
- 78: Wendespirale
- 79: Teilstück
- 80: Leitung
- 81: Öffnung
- 82: Teilstück
- 83: Führungsstück
- 84, 85, 86: Sensor
- 87: Ausgang
- 88: Verschlußkanal
- 89: Wendespirale
- 90: Ausweichspeicher
- 91: Gehäuse
- 92: Umfangswand
- 93: Platte
- 94: Abschlußwand
- 95: Achse
- 96: Öffnung
- 97: Trichter
- 98: Magazin
- 99: Trommel
- 100: Ring
- 100': Hilfsring
- 101: Speiche
- 101': Distanzbolzen
- 102: Nabe
- 103: Lager
- 104: Welle
- 105: Antrieb
- 106: Wandelement
- 107: Kammer
- 108: Stirnfläche
- 109: Scheibe
- 110: Spalt
- 111: Permanentmagnet
- 112: Übergang
- 113: Führungsstück
- 114: Zuförderer
- 115: Sensor
- 116: Arm
- 117: Schacht
- 118, 119: Platte
- 120, 121: Wandabschnitt
- 122: Schlitz
- 123: Rippe
- 124: Leitung
- 125: Sprühkopf
- 126, 127: Öffnung
- 128, 129: Düse
- 130: Verschlußkanalelement
- 131: Achse
- 132: Zylinder
- 133: Sackbohrung
- 134: Schacht

## Patentansprüche

1. Vorrichtung zur Verwendung bei einem Verschlußmagazin einer Verschließmaschine zum Einführen von Verschlüssen (3), die als Kronenkorken aus einem ferromagnetischen Material kappenartig mit einer geschlossenen Seite (3') und einer offenen Seite (3'') hergestellt sind, aus einem eine Vielzahl solcher Verschlüsse (3) aufnehmenden Raum (2, 8, 8a, 8b, 28, 48', 98) in einen Verschlußkanal (5, 9, 29, 68, 68', 68'', 88), in dem die Verschlüsse (3) in einer Reihe aufeinanderfolgend abgeführt werden, mit wenigstens einer magnetischen Fördereinrichtung (17, 17a, 21; 26, 36, 39; 54, 62; 99, 109, 111), die wenigstens an einem Übergang, der teilweise in dem Raum (2, 8, 8a, 8b, 28, 48, 98) und teilweise in einem Eingangsbereich des Verschlußkanals (5, 9, 29, 68, 68', 68'', 88) gebildet ist, durch ein sich bewegendes Magnetfeld eine Förderwirkung auf die Verschlüsse (3) in einer ersten Förderrichtung (A, A', C, D, E, G) zum Einführen in den Verschlußkanal (5, 9, 29, 68, 68', 68'', 88) ausübt, wobei das Magnetfeld auf einer um eine Achse gekrümmten Bewegungsbahn (22, 42, 67) umläuft und der Raum (2, 8, 8a, 8b, 28, 48', 98) zumindest am Übergang von wenigstens einer ersten Anlage- oder Führungsfläche begrenzt ist, gegen die die Verschlüsse (3) mit ihrer offenen oder geschlossenen Seite (3', 3'') anliegen und die in einer Ebene senkrecht zur Achse der Bewegungsbahn (22, 42, 67) des Magnetfeldes angeordnet ist, und wobei die Bewegungsbahn (22, 42, 67) des Magnetfeldes am Übergang (20, 40, 70, 112) im Raum (2, 8, 8a, 8b, 28, 48', 98) sowie im Eingangsbereich des Verschlußkanales (5, 9, 29, 68, 68', 68'', 88) in der ersten Förderrichtung (A, A', C, D, E, G) verläuft, dadurch gekennzeichnet, daß die Ebene der ersten Anlage-und Führungsfläche (11', 12', 12'', 17', 33', 37, 62', 57', 108, 109) sowie der Bewegungsbahn (22, 42, 67) des Magnetfeldes mit der Horizontalen einen Winkel einschließt.

2. Vorrichtung nach Anspruch 1, gekennzeichnet durch ein um die Achse der Bewegungsbahn (22, 42, 67) des Magnetfeldes umlaufend angetriebenes und als Scheibe, Ring, Rad oder Trommel ausgebildetes Element (17, 17a, 36, 54, 62, 99), welches eine erste Anlage- bzw. Führungsfläche (17', 37, 57', 108) bildet und zur Erzeugung des Magnetfeldes wenigstens einen Magneten, vorzugsweise wenigstens einen Permanentmagneten (21, 39, 58, 111) trägt.

3. Vorrichtung nach Anspruch 2, dadurch gekennzeichnet, daß eine Vielzahl von das umlaufende Magnetfeld erzeugenden Magneten (21, 39, 58, 111) vorgesehen ist, daß der wirksame Durchmesser der Magnete (21, 39, 58, 111) höchstens gleich, bevorzugt kleiner als der Durchmesser der Verschlüsse (3) ist, und daß der Achs-Abstand, den benachbarte Magnete (21, 39, 58, 111) voneinander aufweisen, gleich dem Durchmesser der Verschlüsse (3) oder größer ist.

4. Vorrichtung nach Anspruch 1, dadurch gekennzeichnet, daß die magnetische Fördereinrichtung wenigstens eine Magnetanordnung (26) zur Erzeugung eines die Förderwirkung bewirkenden magnetischen Wanderfeldes aufweist.

5. Vorrichtung nach einem der Ansprüche 1 bis 4, dadurch gekennzeichnet, daß die Ebene der ersten Anlage- und Führungsfläche und der Bewegungsbahn (22, 42, 67) des Magnetfeldes mit der Horizontalen einen Winkel kleiner als 90^{o}, vorzugsweise einen Winkel von etwa 55^{o} bis etwa 65^{o}, bevorzugt einen Winkel von etwa 60^{o} einschließt, und daß der Übergang (40, 70, 112) an einer bezogen auf die Neigung der Ebene der Anlage- und Führungsfläche obenliegenden Seite des Raumes (28, 48', 98) vorgesehen ist.

6. Vorrichtung nach Anspruch 5, dadurch gekennzeichnet, daß der Raum (28) von einem Topf oder einer Trommel (30) gebildet ist, daß das erste umlaufende Element eine die Bodenfläche der Trommel (30) bildende Scheibe (36) ist, daß die Bewegungsbahn (42) des wenigstens einen Magneten (39) innerhalb einer zweiten, die Achse (32) der Scheibe (36) umschließenden kreibogenförmigen Anlage- und Führungsfläche (34) verläuft, gegen die die Verschlüsse (3) mit ihrem Rand (3''') anliegen, und daß am Übergang (40) der Verschlußkanal (29) vorzugsweie tangential von der zweiten Anlage- und Führungsfläche (34) wegführt.

7. Vorrichtung nach Anspruch 5, dadurch gekennzeichnet, daß das umlaufende Element eine um ihre Achse umlaufende Trommel (99) ist, die den Raum (48', 98) bildet sowie die erste Anlage- und Führungsfläche mit dem wenigstens einen Magneten (58, 111) aufweist, daß die Bewegungsbahn (67) dieses Magneten innerhalb einer die Achse der Trommel (57, 100) kreisringförmig umschließenden zweiten Anlage- und Führungsfläche (60, 92) verläuft, gegen die die Verschlüsse (3) mit ihrem Rand (3''') anliegen, daß am Übergang (70, 112) der Verschlußkanal (68, 88) tangential von der zweiten Anlage- und Führungsfläche (60, 92) wegführt, und daß die Trommel (99) an ihrem Boden hindurch eine von einer Platte oder Scheibe (62, 109) gebildeten Bodenfläche begrenzt ist, die mit der Trommel (99) umläuft.

8. Vorrichtung nach Anspruch 6 oder 7, dadurch gekennzeichnet, daß die Trommel an ihrem Umfang einen die Trommelachse umschließenden und radial nach innen in den Raum offenen Ringkanal (63, 110) aufweist, der radial außen von der zweiten Anlage- und Führungsfläche (34, 60, 92) begrenzt ist.

9. Vorrichtung nach Anspruch 8, dadurch gekennzeichnet, daß die Trommel einen mit ihr umlaufenden Ring (57, 100) aufweist, der die erste Anlage- und Führungsfläche bildet und dem in Richtung der Achse (53, 95) des Ringes (57, 100) die den Raum (48', 98) begrenzende Platte oder Scheibe (62, 109) beabstandet gegenüberliegt.

10. Vorrichtung nach Anspruch 9, dadurch gekennzeichnet, daß der Ring (57) von einem ringförmigen Flansch (57) eines vorzugsweise topfartig ausgebildeten Rades (54) gebildet ist, und daß das Rad (54) eine mittige Öffnung (54') aufweist, durch die der mit dem Ringkanal (63) in Verbindung stehende Raum (48') mit einem Magazinraum (48) zum Nachfüllen der Verschlüsse (3) in Verbindung steht.

11. Vorrichtung nach einem der Ansprüche 9 oder 10, dadurch gekennzeichnet, daß am Ring (57), am Rad (54) oder an der Trommel (99) in den Raum hineinreichende Vorsprünge zum Auflockern der Verschlüsse (3), vorzugsweise in Form von Rippen oder flügelartigen Elementen (59, 123) vorgesehen sind.

12. Vorrichtung nach einem der Ansprüche 6 bis 11, dadurch gekennzeichnet, daß der wenigstens eine Magnet (39, 58, 111) auf einer Bewegungsbahn (42, 67) bewegt wird, deren radialer Abstand von der außenliegenden Anlage (34, 60, 92) des Teilbereichs (38, 63, 110) kleiner ist als der halbe Durchmesser der Verschlüsse (3).

13. Vorrichtung nach einem der Ansprüche 1 bis 12, dadurch gekennzeichnet, daß am Übergang (40, 70, 112) ein Führungsstück (41, 69, 113) vorgesehen ist, welches mit einer Führungsfläche (41', 69') in der Bewegungsbahn (42, 67) der von dem wenigstens einen Magneten (39, 58, 111) mitgeführten Verschlüsse (3) liegt und diese Verschlüsse (3) in den Verschlußkanal (29, 68, 68', 68'', 88) leitet,
wobei vorzugsweise das Führungsstück (69) an seinem im Bereich der Bewegungsbahn (67) des wenigstens einen Magneten (58) liegenden Endes eine frei drehbar gelagerte Rolle (71) aufweist, deren Umfangsfläche in die Führungsfläche (69') übergeht,
und/oder wobei vorzugsweise die Führungsfläche (69') ein Profil mit einem mittleren, sich entlang der Führungsfläche (69') erstreckenden Vorsprung (72) aufweist, der eine Anlagefläche für die Verschlüsse, bevorzugt eine Anlagefläche für einen glatten Umfangsbereich (3'''') der die Verschlüsse bildenden Kronenkorken (3) bildet,
und/oder wobei das Führungsstück (113) aus einer wirksamen Stellung in eine unwirksame Stellung bewegbar, vorzugsweise schwenkbar ist.

14. Vorrichtung nach einem der Ansprüche 1 bis 4, dadurch gekennzeichnet, daß der Raum (2, 8, 8a) am Übergang (20) von den Innenflächen wenigstens zweier voneinander beabstandeter Wandabschnitte (11, 12) begrenzt ist, die am Übergang (20) jeweils eine erste Anlage- und Führungsfläche für die geschlossene Seite (3') oder offene Seite (3'') der Verschlüsse bilden und in jeweils eine größere Querschnittsseite (9') des einen rechteckförmigen Querschnitt aufweisenden Verschlußkanals (9) übergehen, daß der Raum (2, 8, 8a) am Übergang (20) einen zum Inneren des Raumes hin konvex gekrümmten Bodenabschnitt (15) aufweist, der eine zweite Anlage- und Führungsfläche für den Rand (3''') der Verschlüsse (3) bildet und in eine der beiden kleineren Querschnittsseiten (9'') des Verschlußkanals (9) übergeht, und daß der Bodenabschnitt (15) in seiner Projektion auf eine Ebene der Bewegungsbahn (22) des wenigstens einen Magneten (21) zumindest am Übergang (20) von dieser Bewegungsbahn (22) umschlossen ist,
wobei vorzugsweise die Achse der Bewegungsbahn (22) unterhalb des Bodenabschnittes (15) liegt.

15. Vorrichtung nach Anspruch 14, dadurch gekennzeichnet, daß am Übergang (20) zwischen dem Raum (2, 8, 8a) und dem Verschlußkanal (9) bzw. am Eingangsbereich des Verschlußkanals (9) eine Einrichtung (23) zum Auflockern des von den Verschlüssen (3) gebildeten Verschlußstromes vorgesehen ist, und daß diese Einrichtung außerhalb eines von der Bewegungsbahn (22) des wenigstens einen Magneten umschlossenen Bereichs vorgesehen ist,
und/oder daß die Einrichtung zum Auflockern von einem Rad (23), von einer Scheibe (43), von einer Walze oder dergleichen zweiten umlaufend angetriebenen Element oder von einem durch einen Antrieb hin- und herbewegbaren bzw. schwenkbaren Element (27) gebildet ist.

16. Vorrichtung nach einem der Ansprüche 1 bis 15, dadurch gekennzeichnet, daß bei zwei an den Raum (8a) anschließenden Kanälen (9) die Elemente der Vorrichtung zweifach spiegelsymmetrisch zu einer zwischen den Kanälen verlaufenden Mittelebene (ME) vorgesehen sind.

17. Vorrichtung nach einem der Ansprüche 1 bis 16, dadurch gekennzeichnet, daß bei zwei an den Raum (48') anschließenden Verschlußkanälen (68', 68'') die Vorrichtung so ausgeführt ist, daß mit der magnetischen Fördereinrichtung durch Änderung der ersten Förderrichtung (E) wahlweise der eine Verschlußkanal (68') oder der andere Verschlußkanal (68'') mit Verschlüssen befüllt wird.

18. Vorrichtung nach einem der Ansprüche 1 bis 17, dadurch gekennzeichnet, daß am Verschlußkanal (68', 68'') in Verschlußkanallängsrichtung wenigstens zwei jeweils ein elektrisches Steuersignal liefernde Sensoren (84 - 86) aufeinander folgend vorgesehen sind, von denen ein erster, dem Übergang (70) näherliegender Sensor (84) als Endschalter wirkt, d.h. bei seiner Belegung die Fördereinrichtung (54) stillsetzt, und ein zweiter in Richtung des Verschlußkanales (68', 68'') folgender Sensor (85) die Fördereinrichtung (54) dann einschaltet, wenn dieser Sensor (85) durch Verschlüsse (3) nicht belegt ist,
wobei vorzugsweise ein dritter Sensor (86) vorgesehen ist, der ein eine Störung anzeigendes Signal dann liefert, wenn er durch Verschlüsse (3) nicht belegt ist und/oder keine Bewegung der Verschlüsse (3) vorliegt.

19. Vorrichtung nach einem der Ansprüche 6 bis 18, dadurch gekennzeichnet, daß die Trommel (99) zumindest teilweise in einem Gehäuse (91) aufgenommen ist.

20. Vorrichtung nach einem der Ansprüche 1 bis 19, dadurch gekennzeichnet, daß am Übergang (112) wenigstens ein Ausweichspeicher (90) zur zumindest vorübergehenden Aufnahme von Verschlüssen (3) gebildet ist.

21. Vorrichtung nach Anspruch 20, dadurch gekennzeichnet, daß der Ausweichspeicher (90) wenigstens einen vorzugsweise geschlossenen Schacht (117) zur zumindest zeitweisen Aufnahme der Verschlüsse (3) aufweist und der Schacht (117) mit dem Raum (98) oder dessen Teilbereich (110) und/oder mit dem Verschlußkanal in Verbindung steht,
und/oder daß der Ausweichspeicher (90) bzw. dessen Schacht (117) über eine Öffnung (122) zum Ringkanal (110) hin offen ist,
und/oder daß der Schacht (117) einen im wesentlichen rechteckförmigen Querschnitt aufweist und eine Querschnittsabmessung dieses Querschnittes kleiner als der Durchmesser der Verschlüsse (3), vorzugsweise gleich oder in etwa gleich der Höhe der Verschlüsse ist.

22. Vorrichtung nach einem der Ansprüche 1 bis 21, dadurch gekennzeichnet, daß für eine CIP-Reinigung im Raum (2, 8, 8a, 8b, 28, 48', 98) und/oder im Ausweichspeicher (90) und/oder in wenigstens einem Verschlußkanal (5, 9, 29, 68, 68', 68'', 88) und/oder in einem zwischen der Trommel (99) und dem Gehäuse (91) gebildeten Zwischenraum oder Spalt wenigstens eine Düse oder Austrittsöffnung (81, 125) für eine Reinigungsflüssigkeit und tieferliegend wenigstens eine Ableitung (127) für diese Reinigungsflüssigkeit vorgesehen sind.

23. Vorrichtung nach einem der Ansprüche 1 bis 22, dadurch gekennzeichnet, daß einander gegenüberliegend zwei jeweils einen Raum (98) für die Verschlüsse (3) bildende Trommeln (99) mit jeweils wenigstens einem Verschlußkanal (88) vorgesehen sind, daß eine für beide Trommeln (99) gemeinsame Einrichtung (134) zum Beschicken der Trommeln (99) mit den Verschlüssen (3) vorgesehen ist, und daß Mittel vorgesehen sind, um wahlweise die magnetische Fördereinrichtung (109, 111) der einen oder anderen Trommel (99) zu aktivieren.
